# EUROPÄISCHE PATENTANMELDUNG

(11) **EP 4 357 313 A1**
(43) Veröffentlichungstag der Anmeldung: **24.04.2024**
(21) Anmeldenummer: 22202163.6
(22) Anmeldetag: 18.10.2022
(51) Int. Cl.: C04B 14/06, C04B 28/06, C08F 220/20, C08F 222/10

(54) **METHACRYLATE AUS ZUCKERDERIVATEN ALS REAKTIVE BESTANDTEILE IN REAKTIVHARZEN FÜR DIE CHEMISCHE BEFESTIGUNG**

(71) Anmelder: Hilti Aktiengesellschaft, 9494 Schaan (LI)
(72) Erfinder: Plenk, Christian, 86916 Kaufering (DE); Bürgel, Thomas, 86899 Landsberg (DE); Jaehnichen, Klaus, 01187 Dresden (DE); Kiriy, Nataliya, 01705 Freital (DE); Kobsch, Oliver, 01099 Dresden (DE); Voit, Brigitte, 01187 Dresden (DE)
(74) Vertreter: Hilti Aktiengesellschaft Corporate Intellectual Property

(57) **Zusammenfassung**

Beschrieben wird ein Reaktivharz, umfassend ein Basisharz, welches wenigstens ein Methacrylat eines Zuckerderivats auf Basis einer Furanose, Mannose oder Schleimsäure mit primären und/oder sekundären Hydroxylgruppen als weiteren reaktiven Bestandteil umfasst, eine dieses Reaktivharz enthaltende Reaktivharzkomponente und ein Mehrkomponenten-System, sowie deren Verwendung für die chemische Befestigung.

## Beschreibung

Die vorliegende Erfindung betrifft ein Reaktivharz, umfassend ein Basisharz, welches wenigstens ein Methacrylat eines Zuckerderivats auf Basis einer Furanose, Mannose oder Schleimsäure mit primären und/oder sekundären Hydroxylgruppen als reaktiven Bestandteil umfasst, eine dieses Reaktivharz enthaltende Reaktivharzkomponente und ein Mehrkomponenten-System, sowie deren Verwendung für die chemische Befestigung.

Die Verwendung von Reaktivharzmörteln auf Basis radikalisch härtbarer Verbindungen als Bindemittel ist seit langem bekannt. Im Bereich der Befestigungstechnik hat sich die Verwendung von Reaktivharzen als organische Bindemittel für die chemische Befestigungstechnik, z.B. als Dübelmasse, durchgesetzt. Es handelt sich dabei um Verbundmassen, die als Mehrkomponenten-Systeme konfektioniert sind, wobei eine Komponente das Reaktivharz und die andere Komponente das Härtungsmittel enthält. Andere, übliche Bestandteile, wie beispielsweise Lösungsmittel einschließlich Reaktivlösungsmittel (Reaktivverdünner), können in der einen und/oder der anderen Komponente enthalten sein. Durch Vermischen der beiden Komponenten wird dann durch Radikalbildung die Härtungsreaktion, d.h. die Polymerisation, in Gang gebracht und das Harz zum Duromeren gehärtet. Als radikalisch härtbare Verbindungen werden häufig, insbesondere für die chemische Befestigungstechnik, Vinylesterharze und ungesättigte Polyesterharze eingesetzt.

Als Basisharze werden aufgrund ihrer vorteilhaften Eigenschaften Vinylesterharze und insbesondere Vinylesterurethanharze eingesetzt, die durch Reaktion von monomeren oder polymeren aromatischen Diisocyanaten und Hydroxy-substituierte Methacrylaten, wie Hydroxyalkylmethacrylat, erhältlich sind. Die EP 0713015 B1 beispielsweise beschreibt Dübelmassen mit ungesättigten Polyesterharzen, Vinylesterharzen einschließlich Vinylesterurethanharzen als Basisharzen. Die Verbindungen derartiger Systeme basieren auf der klassischen Erdölchemie, bei der die Rohstoffe aus fossilen Rohstoffquellen, wie Erdöl, erhalten werden.

Es ist allgemein bekannt, dass die fossilen Rohstoffquellen, wie Erdöl, nicht unerschöpflich sind und irgendwann versiegen werden. Für den Fall, dass die Verfügbarkeit der fossilen Rohstoffquellen abnimmt, besteht die Gefahr, dass die Verbindungen, die für die hohen Anforderungen, die an die chemischen Befestigungssysteme gestellt werden, unerlässlich sind, unter Umständen nicht mehr erhältlich sind.

Daher besteht zukünftig Bedarf an alternativen Systemen auf Basis nachwachsender Rohstoffe mit einem hohen Anteil an Kohlenstoff aus nachwachsenden Rohstoffen, um auch in Zukunft weiterhin hoch spezialisierte chemische Befestigungssysteme bereitstellen zu können.

Zahlreiche Versuche, den Anteil an Kohlenstoff aus nachwachsenden Rohstoffen in Mörtelsystemen für die chemische Befestigung zu erhöhen, sind bereits bekannt.

So werden in der DE 10 2014 103 923 A1 biobasierte Reaktivverdünner (RV) und reaktive Harze auf Basis von (Meth)Acrylaten OH-Gruppen-haltiger Pflanzenöle, Zucker, biogener Heterocyclen, Glyzerin und ungesättigter Polyesterharze beschrieben. Ein bevorzugtes Grundharz ist ein Bisphenol-A basiertes Methacrylat (Bis-GMA).

Zur Erhöhung der biogenen Anteile in der Mischung werden dem Reaktivharz auch biogene Füllstoffe wie z.B. Mehle von Kernen oder Schalen bekannter Früchte (Walnüsse, Kirschen, Oliven), oder von Pflanzenfasern, Ligninen, Tanninen, Polysacchariden oder Zucker zugesetzt, wie in der DE 10 2014 103 924 A1 beschrieben. Biogene nichtreaktive Verdünner, z.B. Pflanzenöle, können ebenfalls zur weiteren Erhöhung des biogenen Anteils in der Harzmischung eingesetzt werden, wie in der DE 10 2014 103 920 A1 beschrieben. So ist etwa die Verwendung von Pflanzenöl zur Phlegmatisierung des Peroxids in der Härterkomponente beschrieben.

Weitere geeignete biogene Ausgangsstoffe zur Herstellung reaktiver Komponenten sind beispielsweise Zuckerderivate. Die DE 10 2012 219 476 A1 beschreibt eine Harzmischung auf Basis eines Vinylesterurethanharzes, welches durch Umsetzung von Isosorbid-Derivaten mit Isocyanaten und Hydroxy-(Meth)acrylsäureestern erhalten wird.

Auch Itaconsäure-Derivate sind vielversprechende biogene Ausgangsstoffe, welche durch entsprechende Funktionalisierung zu reaktiven Komponenten für Reaktivharze umgesetzt werden können. Harzzusammensetzungen auf Vinylester-Basis, welche Methacrylat-Derivate und Itaconsäureester als Reaktivverdünner enthalten, sind bekannt. Die WO 2010/108939 A1 beschreibt ein Reaktivharz auf Vinylester-Basis mit reduzierter Viskosität, die dadurch erreicht werden kann, dass der Reaktivverdünner teilweise durch einen Itaconsäureester ersetzt wird. Nachteilig an dem beschriebenen Reaktivharz ist, dass die Reaktivität des Reaktivharzes und dessen Durchhärtung nicht immer gewährleistet ist.

Die DE 10 2012 219 652 A1 beschreibt ebenfalls Reaktivharzkomponenten, welche funktionalisierte Itaconsäure-Derivate als Reaktivverdünner enthalten.

Die Verwendung biogener Itaconsäure-Alkandiol-Oligomerer als reaktive Zusatzstoffe zu härtbaren Vinylesterharzen für Chemiemörtel ist in der EP 3 489 267 A1 beschrieben.

Die WO 14/064097 A1 beschreibt die Verwendung von einem Vinylesterurethanharz auf Basis einer Dianhydrohexitol-Verbindung, wie Isosobid, losmannit oder Isoidid.

Die genannten Dokumente umfassen jedoch keine methacrylierten Zuckerderivate wie in der vorliegenden Anmeldung beschrieben. Ferner fehlt bisher die Möglichkeit, die hoch bzw. höherviskosen petrol-basierten Basisharze durch biogene Basisharze teilweise oder sogar vollständig zu ersetzen, um den biogenen Anteil der Zusammensetzungen weiter zu erhöhen. Gesellschaftlich und klimatechnisch ist es ein Vorteil, nachwachsende Rohstoffe zu verwenden. So ist der Carbon Footprint von Produkten und auch Rohstoffen inzwischen eine technische Maßzahl, durch welche sich Produkte charakterisieren und unterscheiden lassen. Durch Kombination neuer biogener Rohstoffe mit kommerziell verfügbaren (wie z.B. Isobornylmethacrylat) kann der biogene Anteil im Basisharz und damit auch in den Zusammensetzungen signifikant erhöht werden.

Es besteht somit Bedarf an einem Reaktivharz, dessen Basisharz teilweise durch neue Verbindungen ersetzt werden kann, die auf Basis nachwachsender Rohstoffe erhältlich sind, um den Anteil an biobasierten Bestandteilen zu erhöhen, ohne dass die Leistungsfähigkeit eines das Reaktivharz enthaltende Zusammensetzung für die chemische Befestigung beeinträchtigt wird.

Dies kann durch ein Reaktivharz nach Anspruch 1 und einer Reaktivharzkomponente nach Anspruch 8 gelöst werden. Des Weiteren betrifft die vorliegende Erfindung ein Mehrkomponenten-System nach Anspruch 11, welches die erfindungsgemäße Reaktivharzkomponente enthält, sowie die Verwendung eines Methacrylats auf der Basis von biogenen Zucker-Derivaten als Basisharz nach Anspruch 14. Bevorzugte Ausführungsformen sind den Unteransprüchen zu entnehmen.

Zum besseren Verständnis der vorliegenden Erfindung werden die folgenden Erläuterungen der hierin verwendeten Terminologie als sinnvoll erachtet. Im Sinne der Erfindung bedeuten:
- *"Basisharz*" ein üblicherweise festes oder hochviskoses radikalisch polymerisierbares Harz, welches durch Polymerisation (z.B. nach Zugabe eines Initiators in Gegenwart eines Beschleunigers) härtet; das Basisharz kann eine einzelne Verbindung oder eine Mischung aus mehreren unterschiedlichen Verbindungen sein;
- "*Reaktivharz-Masterbatch*" das Reaktionsprodukt der Reaktion zur Herstellung des Basisharzes, also typischerweise eine Mischung aus Basisharz, Stabilisator und weiteren Bestandteilen der Reaktionsmischung;
- *"Reaktivharz*" *eine* Mischung aus Reaktivharz-Masterbatch, einem Beschleuniger und einem Inhibitor (auch als Beschleuniger-Inhibitor-System bezeichnet), einem Reaktivverdünner und gegebenenfalls weiteren Additiven; das Reaktivharz ist typischerweise flüssig oder viskos und kann zu einer Reaktivharzkomponente weiterverarbeitet werden;
- *"Inhibitor"* einen Stoff, der eine unerwünschte radikalische Polymerisation während der Synthese oder der Lagerung eines Harzes oder einer Harz-haltigen Zusammensetzung unterdrückt (diese Stoffe werden in Fachkreisen auch als *"Stabilisator*" bezeichnet) bzw. der eine radikalische Polymerisation eines Harzes nach Zugabe eines Initiators (üblicherweise in Verbindung mit einem Beschleuniger) zeitlich verzögert (diese Stoffe werden in Fachkreisen auch als "*Inhibitor*" bezeichnet - die jeweilige Bedeutung des Begriffes erschließt sich aus dem Kontext);
- *"Initiator"* einen Stoff, der (üblicherweise in Kombination mit einem Beschleuniger) reaktionsinitiierende Radikale bildet;
- "*Beschleuniger*" ein Reagenz, welches mit dem Initiator eine Reaktion eingeht, so dass bereits bei niedrigen Temperaturen durch den Initiator größere Mengen an Radikalen erzeugt werden, oder welches die Zerfallsreaktion des Initiators katalysiert;
- "*Reaktivverdünner*" flüssige oder niedrigviskose Monomere und Basisharze, welche andere Basisharze oder den Reaktivharz-Masterbatch verdünnen und dadurch die zu deren Applikation notwendige Viskosität verleihen, zur Reaktion mit dem Basisharz befähigte funktionelle Gruppen enthalten und bei der Polymerisation (Härtung) zum überwiegenden Teil Bestandteil der gehärteten Masse (z.B. des Mörtels) werden; Reaktivverdünner werden auch co-polymerisierbares Monomer genannt;
- "*Reaktivharzkomponente*" eine flüssige oder viskose Mischung aus Reaktivharz und Füllstoffen und optional weiteren Komponenten, z.B. Additiven; typischerweise ist die Reaktivharzkomponente eine der beiden Komponenten eines Zweikomponenten-Reaktivharz-Systems zur chemischen Befestigung;
- "*Härterkomponente*" eine Zusammensetzung, die als Härtungsmittel einen Initiator für die Polymerisation eines Basisharzes enthält; die Härterkomponente kann fest oder flüssig sein und neben dem Initiator ein Lösungsmittel sowie Füllstoffe und/oder Additive enthalten; typischerweise ist die Härterkomponente neben der Reaktivharzkomponente die andere der beiden Komponenten eines Zweikomponenten-Reaktivharz-Systems zur chemischen Befestigung;
- *"Zweikomponenten-System"* bzw. *"Zweikomponenten-Reaktivharz-System"* ein Reaktivharz-System, das zwei voneinander getrennt gelagerte Komponenten, eine Reaktivharzkomponente (A) und eine Härterkomponente (B), umfasst, so dass eine Härtung des in der Reaktivharzkomponente enthaltenen Basisharzes erst nach dem Mischen der beiden Komponenten erfolgt;
- *"Mehrkomponenten-System"* bzw. *"Mehrkomponenten-Reaktivharz-System"* ein Reaktivharz-System, das mehrere voneinander getrennt gelagerte Komponenten umfasst, unter anderem eine Reaktivharzkomponente (A) und eine Härterkomponente (B), so dass eine Härtung des in der Reaktivharzkomponente enthaltenen Basisharzes erst nach dem Mischen aller Komponenten erfolgt;
- *"(Meth)acryl...*/*...(meth)acryl...",* dass sowohl die "Methacryl.../...methacryl..."- als auch die "Acryl.../...acryl..."-Verbindungen gemeint sein sollen; bevorzugt sind in der vorliegenden Erfindung "Methacryl.../...methacryl... "-Verbindungen gemeint;
- *"(Meth)acrylat"* ein Ester der (Meth)acrylsäure (auch "(Meth)acrylsäureester"), z.B. Methacrylsäuremethylester oder Methylmethacrylat (MMA);
- *"biogen",* auch häufig als biobasiert bezeichnet, auf Basis aus nachwachsenden Rohstoffen gewinnbar; zur Bewertung des Anteils an biogenen Rohstoffen wird üblicherweise der Anteil biogenen Kohlenstoffs, nachgewiesen durch die ¹⁴C-Methode, ermittelt; da das Verhältnis der Kohlenstoffisotope noch nach dem Produktionsprozess bestimmt werden kann, ist eine Unterscheidung zwischen fossiler und biogener Biomasse möglich;
- *"petro-basiert*" auf Basis von fossilen Brennstoffen gewinnbar;
- *"ein*"*, "eine*"*,* "*einer*" als Artikel vor einer chemischen Verbindungsklasse, z.B. vor dem Wort "Methacrylat", dass eine oder mehrere unter diese chemische Verbindungsklasse fallende Verbindungen, z.B. verschiedene Methacrylsäureester, gemeint sein können. In einer bevorzugten Ausführungsform ist mit diesem Artikel nur eine einzelne Verbindung gemeint;
- *"mindestens ein*"*, "mindestens eine", "mindestens einer"* zahlenmäßig "*ein oder mehrere*"*.* In einer bevorzugten Ausführungsform ist mit diesem Begriff zahlenmäßig *"ein", "eine", "einer"* gemeint;
- *"enthalten", "umfassen"* und *"beinhalten",* dass neben den genannten Bestandteilen noch weitere vorhanden sein können. Diese Begriffe sind einschließlich gemeint und umfassen daher auch *"bestehen aus". "Bestehen aus"* ist abschließend gemeint und bedeutet, dass keine weiteren Bestandteile vorhanden sein können. In einer bevorzugten Ausführungsform bedeuten die Begriffe *"enthalten", "umfassen"* und *"beinhalten"* den Begriff *"bestehen aus"*;
- *"etwa"* oder *"circa"* oder "ca." vor einem Zahlenwert einen Bereich von ± 5% dieses Wertes, bevorzugt ± 2% dieses Wertes, bevorzugter ± 1% dieses Wertes, besonders bevorzugt ± 0% dieses Wertes (also genau diesen Wert);
- ein durch Zahlen begrenzter Bereich, z.B. "*von 100°C bis 120°C*"*,* dass die beiden Eckwerte und jeder Wert innerhalb dieses Bereichs einzeln offenbart sind.

Alle in diesem Text genannten Normen (z.B. DIN-Normen oder ISO-Normen) wurden, falls nicht ausdrücklich anders angegeben, in der zum Anmeldetag dieser Anmeldung aktuellen Ausgabe verwendet.

Ein erster Gegenstand der vorliegenden Erfindung ist Reaktivharz, umfassend wenigstens ein Basisharz, welches wenigstens ein Methacrylat eines Zuckerderivats auf Basis einer Furanose, Mannose oder Schleimsäure mit 2 bis 4 primären und/oder sekundären Hydroxylgruppen als reaktiven Bestandteil umfasst. Ein zweiter Gegenstand der Erfindung ist eine Reaktivharzkomponente, welche das erfindungsgemäße Reaktivharz enthält. Ein dritter Gegenstand der Erfindung ist ein Mehrkomponenten-System, welches die das erfindungsgemäße Reaktivharz enthaltende Reaktivharzkomponente umfasst. Ein vierter Gegenstand der Erfindung ist die Verwendung eines Methacrylats eines Zuckerderivats auf Basis einer Furanose, Mannose oder Schleimsäure mit 2 bis 4 primären und/oder sekundären Hydroxylgruppen als reaktiven Bestandteil in einem Reaktivharz zur chemischen Befestigung.

### Basisharz

Die vorliegende Erfindung beschreibt unter anderem die Methacrylierung Hydroxylgruppen-haltiger Zuckerderivate auf Basis einer Furanose, Mannose oder Schleimsäure, wie z.B. 1,2-O-Isopropyliden-a-D-glucofuranose (1,2-IPGF), 1,2-O-Isopropyliden-alpha-D-xylofuranose (1,2-IPXF), 1,2:5,6-Di-O-isopropyliden-D-mannitol (1,2:5,6-DIPM), sowie Schleimsäurederivaten (Galactarsäurederivate), die durch Umsetzung der Ethylester (2,3:4,5-Di-O-isopropyliden-schleimsäurediethylester) mit Ethanolamin-Derivaten erhalten werden können, wie etwa das 2,3:4,5-Di-O-isopropyliden-schleimsäure-di-(N-methyl-N'-2-hydroxyethylamid) (GalX-N-Me-Diol), das ein Umsetzungsprodukt von 2,3:4,5-Di-O-isopropyliden-schleimsäurediethylester 2,3:4,5-Di-O-isopropyliden-schleimsäurediethylester (GalX) mit N-Methylaminoethanol ist. 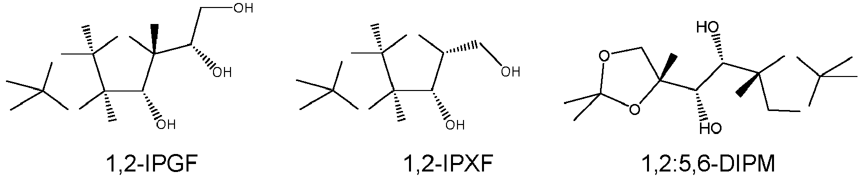 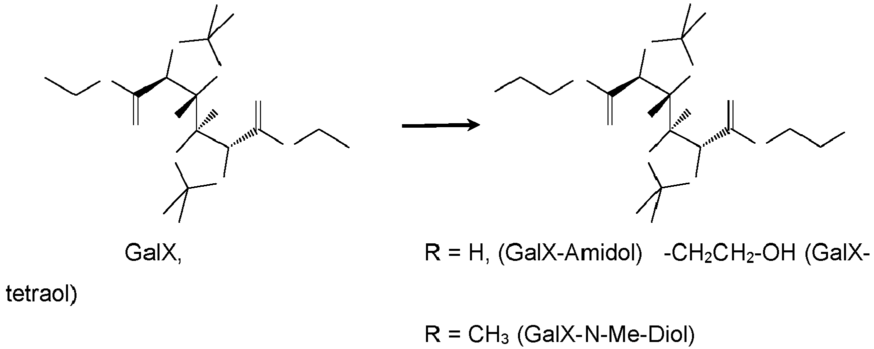 2,3:4,5-Di-O-isopropyliden-schleimsäurediethylester (GalX) ist ein Zwischenprodukt auf Basis von Schleimsäure (auch Galactar- oder Mucinsäure), die aus Zuckerrüben gewonnen wird, wie nachfolgend dargestellt:

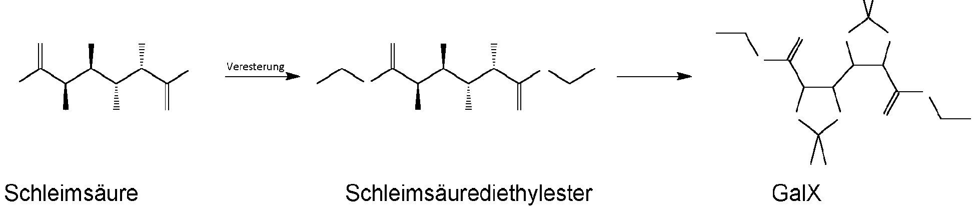

Dieser Ethylester kann mit Ethanolaminderivaten umgesetzt werden, wobei Diole und ein Tetraol zugänglich werden:

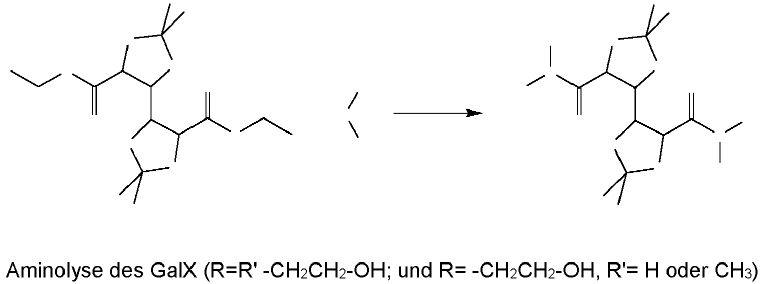

Die Verwendung unterschiedlicher Ethanolaminderivate erlaubt eine gezielte Modifizierung der Löslichkeiten der damit synthetisierten Methacrylate in den in Harzmischungen verwendeten 1,4-BDDMA und 2-Hydroxypropylmethacrylat (HPMA). Die Methacrylierung erfolgt dann durch eine Umesterung von Methylmethacrylat (MMA) mit den Alkoholkomponenten unter Katalyse von bevorzugt K₃PO₄ unter verminderten Druck bei Temperaturen zwischen 60 und 80 °C

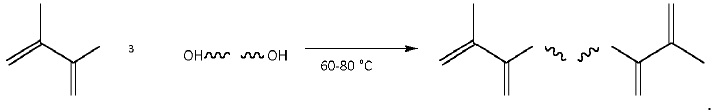

Alternativ kann die Methacrylierung durch katalysierte Umsetzung der Zuckeralkohole mit z.B. 2-Isocyanatoethylmethacrylat (NCO-EtMA) zu den entsprechenden Zucker-basierten Urethanmethacrylaten bei erhöhten Temperaturen erfolgen:

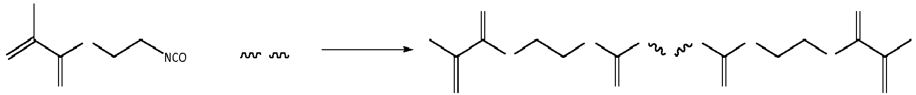

Diese Reaktion kann unter Zugabe eines Lösemittels oder eines Dimethacrylats, welches bei der Abmischung der Harzmischungen als Reaktivverdünner ohnehin zugesetzt wird, erfolgen.

Bei der Umesterungsreaktion der Zucker-basierten Alkohole mit Methylmethacrylat in Gegenwart eines Katalysators (bevorzugt K₃PO₄) erfolgt innerhalb weniger Stunden die Umsetzung der primären Alkoholgruppen, die Reaktion der sekundären OH-Gruppen ist dagegen langsam. Besonders schnell reagieren die 2,3:4,5-Di-O-isopropyliden-schleimsäurediethylester-Derivate (GaIX-Derivate). Nach maximal 8,5 Stunden kann die Reaktionen abgebrochen werden. Bereits nach 2 Stunden sind meist nur noch ca. 25 % der primären Alkoholgruppen die Reaktion noch nicht reagiert. Nach dem Abfiltrieren des Katalysators und dem Abziehen des überschüssigen Methylmethacrylat werden Produkte erhalten, die mehr als 85 % des gewünschten Methacrylats enthalten. Der Rest sind Verbindungen mit weniger Methacrylatgruppen sowie Michael-Additionsprodukte und Rest-Methylmethactylat.

Für die Herstellung des 1,2-O-Isopropyliden-alpha-D-xylofuranose-3,6-dimethacrylats (1,2-IPXF-3,6-DMA) wurde eine schnelle Reaktion aller OH-Gruppen beobachtet. Bereits nach Stunden ist die Reaktion nahezu abgeschlossen, nach 8 Stunden kann abgebrochen und ein Produktgemisch mit ca. 90 mol % Dimethacrylat, Michael-Additionsprodukten und restlichem Methylmethacrylat isoliert werden.

Dagegen betragen die Reaktionszeiten bei der Synthese von 1,2-O-Isopropyliden-α-D-glucofuranose-3,5,6-trimethacrylat (1,2-IPGF-3,5,6-Tri-MA) 12 Stunden. Es kann ein Produktgemisch isoliert werden, welches ca. 90 mol- % des gewünschten Trimethacrylats sowie ca. 6 mol- % eines Methacrylats mit 3-Ringen im Molekül, 5-O-Methacryloyl-1,2-O-isopropyliden-3,6-anhydrido-α-D-glucofuranose (1,2-IP-3,6-Anhydrido-GF-5-MA), und restliches Methylmethacrylat enthält. Der dritte Ring entsteht durch Wasserabspaltung und Ringschluss zwischen den Hydroxylgruppen in 3- und 6-Position.

Die Umesterung von Methylmethacrylat mit 1,2:5,6-Di-O-(isopropyliden)-D-mannitol (1,2:5,6-DIPM) verlief am langsamsten. Die beiden sekundären Hydroxylgruppen sind nach 18 Stunden umgesetzt. Im Finalprodukt sind neben dem gewünschten 1,2:5,6-Bis-O-(isopropyliden)-D-mannitol-3,4-dimethacrylat (1,2:5,6-DIPM-3,4-DMA) (ca. 82 mol%) eine Reihe von Nebenprodukten sowie geringe Spuren Rest-MMA enthalten.

Die Synthese des Urethanmethacrylats aus 2,3:4,5-Di-O-isopropyliden-schleimsäure-di-(N-2-hydroxyethyl-amid) (GaIX-Amidol) und 2-Isocyanatoethylmethacrylat (NCO-Et-MA) erfolgt über 12 Stunden bei 55 - 56 °C (Siedepunkt des als Lösemittels zugesetzten Acetons). Danach kann abgebrochen, abfiltriert und das Lösemittel im Vakuum abgezogen werden. Es wird ein Produktgemisch enthalten, welches ca. 78 mol % des gewünschten Di-UMA, ca. 10 mol- % Aceton (2 wt- %), ca. 8 mol-% Mono-UMA enthält.

Die genannten erhaltenen Produktgemische können direkt für Applikationstests eingesetzt werden. Dabei können die üblicherweise verwendeten petro-basierten Basisharze teilweise oder vollständig durch die Zuckerderivate ersetzt werden. Dem Fachmann ist bekannt, dass gegebenenfalls Anpassungen bei den Mengen der anderen Komponenten der Reaktivharze und diese enthaltenden Zusammensetzungen, wie etwa Reaktivharzkomponenten, vorgenommen werden müssen, so dass die Zahl der Doppelbindungen in der Harzmischung insgesamt konstant bleibt.

Die hierin beschriebenen Zuckerderivate sind geeignet, das petro-basierte Basisharz bzw. die petro-basierten Verbindungen in Reaktivharzen für die chemische Befestigung teilweise oder ganz zu ersetzen, ohne dass Abstriche in den mechanischen Eigenschaften der ausgehärteten Harze in Kauf zu nehmen sind. Erfindungsgemäß umfasst das Basisharz in einer Ausführungsform petro-basierte Verbindungen und zusätzliche die hierin beschriebenen Zuckerderivate. In einer alternativen Ausführungsform umfasst erfindungsgemäß das Basisharz lediglich die hierin beschriebenen Zuckerderivate.

Als Basisharz sind die folgenden Verbindungen ganz besonders geeignet: 1,2-O-lsopropyliden-α-D-glucofuranose-3,5,6-trimethacrylat, 1,2-O-isopropyliden-α-D-xylofuranose-3,5-dimethacrylat, 1,2:5,6-Bis-O-(isopropyliden)-D-mannitol-3,4-dimethacrylat, 2,3:4,5-Di-O-isopropyliden-schleimsäure-di-(N,N'-di-2-O-methacryloyl-ethylamid), 2,3:4,5-Di-O-isopropyliden-schleimsäure-di-(N-methyl-N'-2-O-methacryloyl-ethylamid), 2,3:4,5-Di-O-isopropyliden-schleimsäure-di-(N-[2-O-methacryloyl]-ethylamid), 2,3:4,5-Di-O-isopropyliden-schleimsäure-di-N-[2-O-carbamatoethylmethacrylat]-ethylamid). Insbesondere bevorzugt sind die in den Beispielen genannten Methacrylate und ganz besonders bevorzugt sind O-isopropyliden-schleimsäure-di-(N-methyl-N'-2-O-methacryloyl-ethylamid) und 2,3:4,5-Di-O-isopropyliden-schleimsäure-di-(N-[2-O-methacryloyl]-ethylamid).

Das ist insofern überraschend, als dass jeweils Produkte eingesetzt wurden, die keine Aromatenringe im Molekül haben wie die üblicherweise eingesetzten UMA-Basisharze. Die Glasübergangstemperatur T_{g} der gehärteten Harze mit Zuckerderivaten lagen nur geringfügig unterhalb der Referenzsysteme. Prinzipiell können die reaktiven Zuckerverbindungen durch Zugabe üblicher anorganischer Zuschlagstoffe auch für die Herstellung von Chemiemörteln genutzt werden. Darüber hinaus sind sie auch in anderen Anwendungen, z.B. photohärtbaren Mischungen, verwendbar, bei denen die Reaktivität von Methacrylatgruppen vorteilhaft ist.

Als weitere Verbindungen, die erfindungsgemäß im Basisharz enthalten sein können, sind ethylenisch ungesättigte Verbindungen, Verbindungen mit Kohlenstoff-Kohlenstoff-Dreifachbindungen und Thiol-Yn/En-Harze geeignet, wie sie dem Fachmann bekannt sind.

Von diesen Verbindungen ist die Gruppe der ethylenisch ungesättigten Verbindungen bevorzugt, die Styrol und Derivate davon, (Meth)acrylate, Vinylester, ungesättigte Polyester, Vinylether, Allylether, Itaconate, Dicyclopentadien-Verbindungen und ungesättigte Fette umfasst, wovon insbesondere ungesättigte Polyesterharze und Vinylesterharze geeignet und beispielsweise in den Anmeldungen EP 1 935 860 A1, DE 195 31 649 A1 und WO 10/108939 A1 beschrieben sind. Vinylesterharze sind dabei aufgrund ihrer hydrolytischen Beständigkeit und ausgezeichneten mechanischen Eigenschaften am stärksten bevorzugt.

Beispiele geeigneter ungesättigter Polyester, die in der erfindungsgemäßen Reaktivharzmischung verwendet werden können, werden in folgende Kategorien eingeteilt:
(1) Ortho-Harze: diese basieren auf Phthalsäureanhydrid, Maleinsäureanhydrid oder Fumarsäure und Glykolen, wie 1,2-Propylenglykol, Ethylenglykol, Diethylenglykol, Triethylenglykol, 1,3-Propylenglykol, Dipropylenglykol, Tripropylenglykol, Neopentylglykol oder hydrogeniertes Bisphenol-A;
(2) Iso-Harze: diese werden aus Isophthalsäure, Maleinsäureanhydrid oder Fumarsäure und Glykolen hergestellt. Diese Harze können höhere Anteile an Reaktivverdünnern enthalten als die Ortho-Harze;
(3) Bisphenol-A-fumarate: diese basieren auf ethoxyliertem Bisphenol-A und Fumarsäure;
(4) HET-Säure-Harze (Hexachloro-endo-methylen-tetrahydrophthalsäure-Harze): sind Harze, die aus Chlor/Brom enthaltenden Anhydriden oder Phenolen bei der Herstellung von ungesättigten Polyesterharzen gewonnen werden.

Neben diese Harzklassen können noch die sogenannten Dicyclopentadien-Harze (DCPD-Harze) als ungesättigte Polyesterharze unterschieden werden. Die Klasse der DCPD-Harze wird entweder durch Modifikation eines der oben genannten Harztypen durch Diels-Alder-Reaktion mit Cyclopentadien erhalten, oder sie werden alternativ durch eine erste Reaktion eines Diacids, z.B. Maleinsäure, mit Dicyclopentadien, und anschließend durch eine zweite Reaktion, der gewöhnlichen Herstellung eines ungesättigten Polyesterharzes erhalten, wobei man bei letzterem von einem DCPD-Maleatharz spricht.

Das ungesättigte Polyesterharz hat bevorzugt ein Molekulargewicht Mn im Bereich von 500 bis 10.000 Dalton, stärker bevorzugt im Bereich von 500 bis 5000 und noch stärker bevorzugt im Bereich von 750 bis 4000 (nach ISO 13885-1). Das ungesättigte Polyesterharz hat einen Säurewert im Bereich 0 bis 80 mg KOH/g Harz, bevorzugt im Bereich von 5 bis 70 mg KOH/g Harz (nach ISO 2114-2000). Wird ein DCPD-Harz als ungesättigtes Polyesterharz verwendet beträgt der Säurewert bevorzugt 0 bis 50 mg KOH/g Harz.

Im Sinne der Erfindung sind Vinylesterharze Oligomere oder Polymere mit mindestens einer (Meth)acrylat-Endgruppe, so genannte (Meth)acrylat-funktionalisierte Harze, wozu auch Urethan(meth)acrylat-Harze und Epoxy(meth)acrylate zählen.

Vinylesterharze, die nur in Endstellung ungesättigten Gruppen aufweisen, werden zum Beispiel durch Umsetzung von Epoxid-Oligomeren oder -Polymeren (z.B. Bisphenol A-digylcidylether, Epoxide vom Phenol-Novolak-Typ oder Epoxid-Oligomere auf der Basis von Tetrabrombisphenol A) mit beispielsweise (Meth)acrylsäure oder (Meth)acrylamid erhalten. Bevorzugte Vinylester-Harze sind (Meth)acrylat-funktionalisierte Harze und Harze, die durch Umsetzung eines Epoxid-Oligomeren oder -Polymeren mit Methacrylsäure oder Methacrylamid, bevorzugt mit Methacrylsäure, erhalten werden. Beispiele solcher Verbindungen sind aus den Anmeldungen US 3297745 A, US 3772404 A, US 4618658 A, GB 2217722 A1, DE 3744390 A1 und DE 4131457 A1 bekannt. In diesem Zusammenhang wird auf die Anmeldung US 2011/071234 verwiesen.

Das Vinylester-Harz hat bevorzugt ein Molekulargewicht Mn im Bereich von 500 bis 3000 Dalton, stärker bevorzugt 500 bis 1500 Dalton (nach ISO 13885-1). Das Vinylester-Harz hat einen Säurewert im Bereich von 0 bis 50 mg KOH/g Harz, bevorzugt im Bereich von 0 bis 30 mg KOH/g Harz (nach ISO 2114-2000).

Als Vinylesterharz besonders geeignet sind ethoxyliertes Bisphenol-A-di(meth)acrylat mit einem Ethoxylierungsgrad von 2 bis 10, vorzugsweise von 2 bis 4, difunktionelle, trifunktionelle oder höherfunktionelle Urethan(meth)acrylat-Oligomere oder Mischungen dieser härtbaren Bestandteile.

Beispiele für derartige Epoxy(meth)acrylate sind solche der Formel (I) 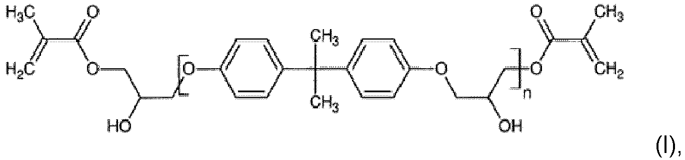 worin n für eine Zahl grösser oder gleich 1 steht (wenn Gemische verschiedener Moleküle mit unterschiedlichen n-Werten vorliegen und durch die Formel (I) repräsentiert werden, sind auch nicht-ganzzahlige Zahlen als Mittelwert möglich).

Weitere Beispiele für die propoxylierten oder insbesondere ethoxylierten aromatischen Diol-, wie Bisphenol-A-, Bisphenol-F- oder Novolak- (insbesondere di-)(meth)acrylate sind solche der Formel (II) 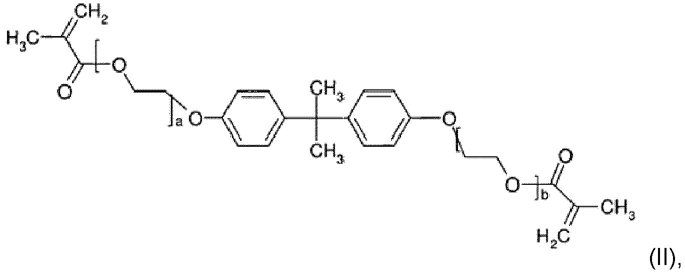 worin a und b jeweils unabhängig voneinander für eine Zahl grösser oder gleich 0 stehen mit der Maßgabe, dass vorzugsweise mindestens einer der Werte grösser als 0 ist, vorzugsweise beide 1 oder grösser sind (wenn Gemische verschiedener Moleküle mit unterschiedlichen (a und b)-Werten vorliegen und durch die Formel (II) repräsentiert werden, sind auch nicht-ganzzahlige Zahlen als Mittelwert möglich).

Ganz besonders geeignet sind die bekannten Reaktionsprodukte aus Di- oder Polyisocyanaten und Hydroxyalkylmethylacrylaten, wie sie beispielsweise in der DE 2 312 559 A1 beschrieben sind, Addukte aus (Di)Isocyanaten und 2,2-Propanbis-[3-(4-phenoxy)-1,2-hydroxypropan-1-methacrylat] nach der US-PS 3 629 187 sowie die Addukte aus Isocyanaten und Methacryloylalkylethern, -alkoxybenzolen bzw. -alkoxycycloalkanen, wie sie in der EP 44352 A1 beschrieben sind. In diesem Zusammenhang wird auf die DE 2312559 A1, DE 19902685 A1, EP 0684906 A1, DE 4111828 A1 und DE 19961342 A1 verwiesen. Selbstverständlich können auch Gemische aus geeigneten Monomeren verwendet werden.

All diese Harze, die erfindungsgemäß verwendet werden können, können gemäß dem Fachmann bekannten Verfahren modifiziert werden, um zum Beispiel geringere Säurezahlen, Hydroxidzahlen oder Anhydridzahlen zu erreichen, oder durch das Einbringen von flexiblen Einheiten in das Grundgerüst flexibler gemacht werden, und dergleichen.

Darüber hinaus kann das Basisharz noch andere reaktive Gruppen, die mit einem Radikalinitiator, wie Peroxiden, polymerisiert werden können, enthalten, zum Beispiel reaktive Gruppen, die von der Itaconsäure, Citraconsäure und allylischen Gruppen und dergleichen abgeleitet sind, wie sie beispielsweise in der WO 2010/108939 A1 (Itaconsäureester) beschrieben sind.

Bevorzugt enthält das Basisharz mindestens 10 Gew.-%, weiter bevorzugt mindestens 15 Gew.-%, besonders bevorzugt mindestens 20 Gew.-% des Methacrylats auf Basis von Zuckerderivaten, bezogen auf das Gesamtgewicht des Basisharzes. Gemäß einer besonders bevorzugten Ausführungsform enthält das Basisharz 20 bis 40 Gew.-% und gemäß einer ganz besonders bevorzugten Ausführungsform 15 bis 25 Gew.-% aus dem Methacrylat auf Basis von Zuckerderivaten.

Gemäß einer bevorzugten Ausführungsform der vorliegenden Erfindung beträgt der prozentuale Anteil (in Gew.-% des Reaktivharzes) von Basisharz in dem erfindungsgemäßen Reaktivharz beträgt vorteilhafterweise mehr als etwa 5 Gew.-%, bevorzugt mehr als etwa 15 Gew.-%, und besonders bevorzugt mehr als etwa 20 Gew.- %. Der prozentuale Anteil (in Gew.-% des Reaktivharzes) von Basisharz in dem Reaktivharz beträgt vorteilhafterweise von etwa 5 Gew.-% bis etwa 90 Gew.-%, bevorzugt von etwa 10 Gew.-% bis etwa 80 Gew.-%, weiter bevorzugt von etwa 20 Gew.- % bis etwa 70 Gew.-%, noch weiter bevorzugt von etwa 40 Gew.-% bis etwa 70 Gew.- %, noch weiter bevorzugt von etwa 50 Gew.-% bis etwa 70 Gew.-%, besonders bevorzugt von etwa 55 Gew.-% bis etwa 70 Gew.-% und ganz besonders bevorzugt von etwa 55 Gew.-% bis etwa 65 Gew.-%.

### Reaktivverdünner

Neben dem Basisharz und den Methactrylaten der Zuckerderivate kann das Reaktivharz noch weitere niedrigviskose co-polymerisierbare Verbindungen mit weingstens einer (Meth)acrylatgruppe als Reaktivverdünner enthalten. Geeignete Reaktivverdünner sind etwa in der EP 1 935 860 A1 und der DE 195 31 649 A1 beschrieben. Grundsätzlich können auch andere übliche Reaktivverdünner, allein oder im Gemisch mit (Meth)acrylsäureestern, eingesetzt werden, z. B. Styrol, α-Methylstyrol, alkylierte Styrole, wie tert-Butylstyrol, Divinylbenzol, Vinylether und/oder Allylverbindungen.

Vorzugsweise enthält die Reaktivharzmischung als Reaktivverdünner einen (Meth)acrylsäureester, wobei besonders bevorzugt aliphatische oder aromatische C₅-C₁₅-(Meth)acrylate ausgewählt werden. Geeignete Beispiele umfassen: 2-, 3-Hydroxypropyl(meth)acrylat (HP(M)A), 1,3-Propandioldi(meth)acrylat, 1,3-Butandioldi(meth)acrylat, 1,4-Butandioldi(meth)acrylat, Trimethylolpropantri(meth)acrylat, Phenethyl(meth)acrylat, Tetrahydrofurfuryl(meth)acrylat, *N,N*-Dimethylaminoethyl(meth)acrylat, *N,N-*Dimethylaminomethyl(meth)acrylat, Acetoacetoxyethyl(meth)acrylat, Isobornyl(meth)acrylat, 2-Ethylhexyl(meth)acrylat, Methoxypolyethylenglykol-mono(meth)acrylat, Trimethylcyclohexyl(meth)acrylat, 2-Hydroxyethyl(meth)acrylat, Dicyclopentenyloxyethyl(meth)acrylat und/oder Tricyclopentadienyldi(meth)acrylat, Bisphenol-A-(meth)acrylat, Novolakepoxidi(meth)acrylat, Di-[(meth)acryloyl-maleoyl]-tricyclo-5.2.1.0.^{2.6}-decan, Dicyclopentenyloxyethylcrotonat, 3-(Meth)acryloyl-oxymethyl-tricylo-5.2.1.0.^{2.6}-decan, 3-(Meth)cyclopentadienyl(meth)acrylat, und Decalyl-2-(meth)acrylat; Glycerolformal(meth)acrylat; Solketal(meth)acrylat, Cyclohexyl(meth)acrylat, Phenoxyethyldi(meth)acrylat, Methoxyethyl(meth)acrylat, *tert-*Butyl(meth)acrylat und Norbornyl(meth)acrylat. Methacrylate sind gegenüber Acrylaten bevorzugt. Besonders bevorzugt sind 2- und 3-Hydroxypropylmethacrylat (HPMA), 1,2-Ethandioldimethacrylat, 1,4-Butandioldimethacrylat (BDDMA), 1,3-Butandioldimethacrylat, Trimethylolpropantrimethacrylat, Acetoacetoxyethylmethacrylat, Isobornylmethacrylat, Bisphenol-A-methacrylat, Trimethylcyclohexylmethacrylat, 2-Hydroxyethylmethacrylat, PEG200-dimethacrylat und Norbornylmethacrylat. Ganz besonders bevorzugt sind 1,4-Butandioldimethacrylat und ein Gemisch aus 2- und 3-Hydroxypropylmethacrylat (HPMA), oder eine Mischung aus diesen drei Methacrylaten. Am bevorzugtesten ist ein Gemisch aus 2- und 3-Hydroxypropylmethacrylat (HPMA). Grundsätzlich können auch andere übliche radikalisch polymerisierbare Verbindungen, allein oder im Gemisch mit den (Meth)acrylsäureestern, als Reaktivverdünner eingesetzt werden, z. B. Styrol, α-Methylstyrol, alkylierte Styrole, wie tert-Butylstyrol, Divinylbenzol und Vinyl- sowie Allylverbindungen, wobei die nicht kennzeichnungspflichtigen Vertreter davon bevorzugt sind. Beispiele für derartige Vinyl- oder Allylverbindungen sind Hydroxybutylvinylether, Ethylenglykoldivinylether, 1,4-Butandioldivinylether, Trimethylolpropandivinylether, Trimethylolpropantrivinylether, Mono-, Di-, Tri-, Tetra- und Polyalkylenglykolvinylether, Mono-, Di-, Tri-, Tetra- und Polyalkylenglykolallylether, Adipinsäuredivinylester, Trimethylolpropandiallylether und Trimethylolpropantriallylether.

Gemäß einer Ausführungsform der vorliegenden Erfindung enthält das Reaktivharz jedoch mindestens einen biogenen Reaktivverdünner, um den Gehalt an biobasierten Verbindungen weiter zu erhöhen. Geeignete Reaktivverdünner sind etwa in der EP 3 489 267 A1, EP 3 489 205 A1 und EP 3 272 777 A1 beschrieben.

Bevorzugt enthält das erfindungsgemäße Reaktivharz 10 bis 95 Gew.-%, weiter bevorzugt 20 Gew.-% bis 92 Gew.-%, noch weiter bevorzugt 40 bis 90 Gew.-%, besonders bevorzugt 50 Gew.-% bis 70 Gew.-% des mindestens einen Reaktivverdünners, bezogen auf das Gesamtgewicht des Reaktivharzes.

### Beschleuniger

Gemäß einer weiter bevorzugten Ausführungsform der Erfindung liegt das Reaktivharz in vorbeschleunigter Form vor, das heißt es enthält mindestens einen Beschleuniger für den Initiator, der als Härtungsmittel fungiert. Bevorzugte Beschleuniger sind aromatische Amine und/oder Salze von Kobalt, Mangan, Zinn, Vanadium oder Cer. Besonders vorteilhaft haben sich als Beschleuniger Aniline, p- und m-Toluidine und Xylidine, die symmetrisch oder asymmetrisch mit Alkyl- oder Hydroxyalkylresten substituiert sind, erwiesen. Beispielhaft können die folgenden bevorzugten Beschleuniger erwähnt werden: N,N-Dimethylanilin, N,N-Diethylanilin, N,N-Diethylolanilin, N-Ethyl-N-ethylolanilin, N,N-Di-isopropanol-*p*-toluidin, N,N-Diisopropyliden-*p*-toluidin, N,N-Dimethyl-p-toluidin, N,N-Diethylol-p-toluidin, N,N-Diethylol-*m*-toluidin, N,N-Diisopropylol-*m*-toluidin, N,N-Bis(2-hydroxyethyl)toluidin, N,N-Bis(2-hydroxyethyl)xylidin, N-Methyl-N-hydroxyethyl-p-toluidin, Cobaltoctoat, Cobaltnaphthenat, Vanadium(IV)-acetylacetonat und Vanadium(V)-acetylacetonat.

Der Beschleuniger bzw. die Beschleunigermischung wird erfindungsgemäß in einer Menge von 0,05 bis 5,0 Gew.-%, vorzugsweise 1,0 bis 2,5 Gew.-%, bezogen auf das Gesamtgewicht des Reaktivharzes, eingesetzt.

### Inhibitor

In einer weiteren Ausführungsform der Erfindung enthält das Reaktivharz ferner mindestens noch einen Polymerisationsinhibitor zur Sicherstellung der Lagerstabilität und zur Einstellung der Gelzeit. Als Polymerisationsinhibitoren sind erfindungsgemäß die für radikalisch polymerisierbare Verbindungen üblicherweise verwendeten Polymerisationsinhibitoren geeignet, wie sie dem Fachmann bekannt sind. Bevorzugt sind die Polymerisationsinhibitoren unter phenolischen Verbindungen und nicht-phenolischen Verbindungen, wie stabilen Radikalen und/oder Phenothiazinen, ausgewählt.

Als phenolische Inhibitoren, die oft Bestandteil von kommerziellen radikalisch härtenden Reaktivharzen sind, kommen Phenole, wie 2-Methoxyphenol, 4-Methoxyphenol, 2,6-Di-tert-butyl-4-methylphenol, 2,4-Di-tert-butylphenol, 2,6-Di-tert-butylphenol, 2,4,6-Trimethylphenol, 2,4,6-Tris(dimethylaminomethyl)phenol, 4,4'-Thio-bis(3-methyl-6-tert-butylphenol), 4,4'-Isopropylidendiphenol, 6,6'-Di-tert-butyl-4,4'-bis(2,6-di-tert-butylphenol), 1,3,5-Trimethyl-2,4,6-tris(3,5-di-tert-butyl-4-hydroxybenzyl)benzol, 2,2'-Methylen-di-p-cresol, Brenzkatechin und Butylbrenzkatechine, wie 4-tert-Butylbrenzkatechin, 4,6-Di-tert-butylbrenzkatechin, Hydrochinone, wie Hydrochinon, 2-Methylhydrochinon, 2-tert-Butylhydrochinon, 2,5-Di-tert-butylhydrochinon, 2,6-Di-tert-butylhydrochinon, 2,6-Dimethylhydrochinon, 2,3,5-Trimethylhydrochinon, Benzochinon, 2,3,5,6-Tetrachloro-1,4-benzochinon, Methylbenzochinon, 2,6-Dimethylbenzochinon, Naphthochinon, oder Gemische von zweien oder mehreren davon, in Frage.

Als nicht-phenolische Polymerisationsinhibitoren kommen vorzugsweise Phenothiazine, wie Phenothiazin und/oder Derivate oder Kombinationen davon, oder stabile organische Radikale, wie Galvinoxyl- und N-Oxylradikale in Betracht.

Als N-Oxylradikale können beispielsweise solche verwendet werden, wie sie in der DE 199 56 509 beschrieben sind. Geeignete stabile N-Oxylradikale (Nitroxylradikale) können unter 1-Oxyl-2,2,6,6-tetramethylpiperidin, 1-Oxyl-2,2,6,6-tetramethylpiperidin-4-ol (ebenso als TEMPOL bezeichnet), 1-Oxyl-2,2,6,6-tetramethylpiperidin-4-on (ebenso als TEMPON bezeichnet), 1-Oxyl-2,2,6,6-tetramethyl-4-carboxyl-piperidin (ebenso als 4-Carboxy-TEMPO bezeichnet), 1-Oxyl-2,2,5,5-tetramethylpyrrolidin, 1-Oxyl-2,2,5,5-tetramethyl-3-carboxylpyrrolidin (ebenso als 3-Carboxy-PROXYL bezeichnet), Aluminium-N-nitrosophenylhydroxylamin, Diethylhydroxylamin ausgewählt werden. Ferner sind geeignete N-Oxylverbindungen Oxime, wie Acetaldoxim, Acetonoxim, Methylethylketoxim, Salicyloxim, Benzoxim, Glyoxime, Dimethylglyoxim, Aceton-O-(benzyloxycarbonyl)oxim und dergleichen.

Die Polymerisationsinhibitoren können, abhängig von den gewünschten Eigenschaften der Harzzusammensetzungen, entweder allein oder als Kombination von zweien oder mehreren davon verwendet werden. Die Kombination der phenolischen und der nicht-phenolischen Polymerisationsinhibitoren ermöglicht dabei einen synergistischen Effekt, wie die Einstellung einer im Wesentlichen driftfreien Einstellung der Gelzeit des Reaktivharzes.

Der Gewichtsanteil der nicht-phenolischen Polymerisationsinhibitoren liegt vorzugsweise im Bereich von 1 ppm bis 1 Gew.-%, vorzugsweise im Bereich von 10 ppm bis 1 Gew.-%, bezogen auf das Gesamtgewicht des Reaktivharzes.

Bevorzugt handelt es sich bei dem Inhibitor um einen phenolischen Inhibitor. Insbesondere bevorzugt sind Brenzkatechin und Butylbrenzkatechine, wie 4-tert-Butylbrenzkatechin, 4,6-Di-tert-butylbrenzkatechin.

Gemäß einer bevorzugten Ausführungsform enthält das erfindungsgemäße Reaktivharz bis zu 1,0 Gew.-%, mehr bevorzugt 0,0001 bis 0,5 Gew.-%, besonders bevorzugt 0,01 bis 0,1 Gew.-% des Inhibitors, bezogen auf das Gesamtgewicht des Reaktivharzes.

Bevorzugt enthält demnach das erfindungsgemäße Reaktivharz 5 bis 90 Gew.-%, weiter bevorzugt 10 bis 80 Gew.-%, noch weiter bevorzugt 20 bis 70 Gew.-%, besonders bevorzugt 50 bis 70 Gew.-% des Basisharzes, 10 bis 95 Gew.-%, weiter bevorzugt 20 bis 90 Gew.-%, noch weiter bevorzugt 25 bis 80 Gew.-%, besonders bevorzugt 30 bis 70 Gew.-% des mindestens einen Reaktivverdünners, bevorzugt 0,05 bis 5 Gew.-%, besonders bevorzugt 1,0 bis 2,5 Gew.-% und bis zu 1,0 Gew.-%, weiter bevorzugt 0,0001 bis 0,5 Gew.-%, besonders bevorzugt 0,01 bis 0,1 Gew.-% des Inhibitors, bezogen auf das Gesamtgewicht des Reaktivharzes.

Das erfindungsgemäße Reaktivharz wird zur Herstellung von Reaktivharzkomponenten für die chemische Befestigungstechnik eingesetzt.

### Reaktivharzkomponente

Ein weiterer Gegenstand der Erfindung ist daher eine Reaktivharzkomponente, welche zusätzlich zu dem Reaktivharz übliche anorganische oder organische Zuschlagstoffe, wie Füllstoffe, Verdickungsmittel, Thixotropiermittel, nicht reaktive Lösungsmittel, Mittel zur Verbesserung der Fließfähigkeit und/oder Netzmittel enthält. Die Füllstoffe sind vorzugsweise ausgewählt aus der Gruppe bestehend aus Teilchen aus Quarz, Quarzgut, Korund, Calciumcarbonat, Calciumsulfat, Glas und/oder organischen Polymeren unterschiedlichster Größe und Form, beispielsweise als Sand oder Mehl, in Form von Kugeln oder Hohlkugeln, aber auch in Form von Fasern aus organischen Polymeren, wie beispielsweise Polymethylmethacrylat, Polyester, Polyamid oder auch in Form von Mikrokugeln aus Polymeren (Perlpolymerisaten). Bevorzugt und deutlicher verstärkend wirken sich die globulären, inerten Stoffe (Kugelform) aus.

Als Verdickungsmittel oder Thixotropiermittel sind solche auf der Grundlage von Silikaten, Bentonit, Laponit, pyrogener Kieselsäure, Polyacrylaten und/oder Polyurethanen bevorzugt.

Die anorganischen oder organischen Zuschlagstoffe können in einer Menge von 20 bis 80 Gew.-%, weiter bevorzugt 30 bis 75 Gew.-%, noch weiter bevorzugt 40 bis 70 Gew.- %, besonders bevorzugt 50 bis 70 Gew.-% in der Reaktivharzkomponente enthalten sein, bezogen auf das Gesamtgewicht der Reaktivharzkomponente.

### Mehrkomponenten-System

Ein weiterer Gegenstand der Erfindung ist ein Mehrkomponenten-System, das mindestens zwei (räumlich) getrennte Komponenten A und B umfasst. Das Mehrkomponenten-System umfasst zwei oder mehr separate, miteinander verbundene und/oder ineinander verschachtelte Behältnisse, wobei das eine die Komponente A, die Reaktivharzkomponente, und das andere die Komponente B, die Härterkomponente, beinhaltet.

Bevorzugt enthält das erfindungsgemäße Mehrkomponenten-System die Reaktivharzkomponente (Komponente A) und die Härterkomponente (Komponente B) in einem Gewichtsverhältnis von etwa 3:1 bis etwa 10:1, weiter bevorzugt 3:1 bis etwa 7:1, noch weiter bevorzugt von etwa 4:1 bis etwa 6:1. Besonders bevorzugt enthält das erfindungsgemäße Mehrkomponenten-System die Reaktivharzkomponente (Komponente A) und die Härterkomponente (Komponente B) in einem Gewichtsverhältnis von etwa 5:1.

Das Mehrkomponenten-System kann in Form einer Patrone, einer Kartusche oder eines Folienbeutels vorliegen. Bei der bestimmungsgemäßen Verwendung der erfindungsgemässen Reaktivharzmörtel werden die Komponente A und die Komponente B entweder unter Einwirkung mechanischer Kräfte oder durch Gasdruck aus den Patronen, Kartuschen oder Folienbeuteln ausgepresst, miteinander vermischt, vorzugsweise mit Hilfe eines Statikmischers, durch den die Bestandteile hindurchgeführt werden, und in das Bohrloch eingefüllt, wonach die zu befestigende Einrichtung, wie eine Ankergewindestange oder dergleichen, in das mit dem aushärtenden Reaktivharz beschickte Bohrloch eingebracht und entsprechend justiert wird.

### Radikalinitiator

Bevorzugte Härtungsmittel in der Härterkomponente B sind lagerstabile organische Peroxide. Besonders gut geeignet sind Dibenzoylperoxid und Methylethylketonperoxid, ferner *tert*-Butylperbenzoat, Cyclohexanonperoxid, Lauroylperoxid und Cumolhydroperoxid, sowie *tert*-Butylperoxy-2-ethylhexanoat.

Die Peroxide werden dabei bevorzugt in Mengen von 0,2 bis 10 Gew.-%, weiter bevorzugt von 0,2 bis 7 Gew.-%, bezogen auf die Reaktivharzkomponente, eingesetzt.

Bei einer besonders bevorzugten Ausführungsform des erfindungsgemäßen Mehrkomponenten-Systems enthält die Komponente A neben dem härtbaren Reaktivharz zusätzlich noch eine hydraulisch abbindende oder polykondensierbare anorganische Verbindung, insbesondere Zement, und die Komponente B neben dem Härtungsmittel noch Wasser. Derartige Hybridmörtelsysteme sind ausführlich in der DE 42 31 161 A1 beschrieben. Dabei enthält die Komponente A vorzugsweise als hydraulisch abbindende oder polykondensierbare anorganische Verbindung Zement, beispielsweise Portlandzement oder Aluminatzement, wobei eisenoxidfreie oder eisenoxidarme Zemente besonders bevorzugt sind. Als hydraulisch abbindende anorganische Verbindung kann auch Gips als solcher oder in Mischung mit dem Zement eingesetzt werden.

Die Komponente A kann als polykondensierbare anorganische Verbindung auch silikatische, polykondensierbare Verbindungen, insbesondere lösliches, gelöstes und/oder amorphes Siliziumdioxid enthaltende Stoffe umfassen.

Ein weiterer Gegenstand der vorliegenden Erfindung ist die Verwendung von mindestens einem Itaconsäureester der Formel (I) als Reaktivverdünner in einer Reaktivharzkomponente zur chemischen Befestigung eines Verankerungsmittels in einem Bohrloch.

Bevorzugt ist das Verankerungsmittel aus Stahl oder aus Eisen.

Zusätzlich oder alternativ hierzu ist das Bohrloch bevorzugt ein Bohrloch in mineralischem oder metallischem Untergrund, bevorzugt einem Untergrund ausgewählt aus der Gruppe bestehend aus Beton, Porenbeton, Ziegelwerk, Kalksandstein, Sandstein, Naturstein, Glas und Stahl.

Der Vorteil der Erfindung liegt darin, dass gezeigt werden konnte, dass es möglich ist, konventionelle petrochemie-basierte Bestandteile von Reaktivharzen und damit Bestandteile einer diese Reaktivharze enthaltenden Reaktivharzkomponenten durch biobasierte Komponenten zu ersetzen, ohne dass die Eigenschaften der Reaktivharzkomponente und der damit erhältlichen chemischen Mörtelmassen negativ beeinflusst werden.

Die folgenden Beispiele dienen der weiteren Erläuterung der Erfindung.

### AUSFÜHRUNGSBEISPIELE

### Verwendete Komponenten und Abkürzungen

| | | |
|---|---|---|
| 1,2-IPGF | 1,2-O-Isopropyliden-α-D-qlucofuranose | |
| 5-O-Methacryloyl-1,2-O-isopropyliden-3,6-anhydrido-α-D-glucofuranose | 1,2-IP-3,6-Anhydrido-GF-5-MA | |
| 1,2-IPXF | 1,2-O-Isopropyliden-α-D-xvlofuranose | |
| 1,2-O-isopropyliden-α-D-xylofuranose-3,5-dimethacrylat | 1,2-IPXF-3,5-DMA | |
| 1,2:5,6-DIPM | 1,2:5,6-Di-O-isopropyliden-D-mannitol | |
| 1,2:5,6-DIPM-3,4-DMA | 1,2:5,6-Bis-O-(isopropyliden)-D-mannitol-3,4-dimethacrylat | |
| GalX | 23:45-Di-O-isopropyloden-schleimsäurediethylester | |
| GalX-Tetraol | 2,3:4,5-Di-O-isopropylidenschleimsäure-di-(N,N'-di-2-hydroxyethylamid) | |
| GalX-Tetra-MA | 2,3:4,5-Di-O-isopropylidenschleimsäure-di-(N,N'-di-2-O-methacryloyl-ethylamid) | |
| GalX-N-Me-Diol | 2,3:4,5-Di-O-isopropyliden-schleimsäure-di-(N-methyl-N'-2-hydroxyethylamid) | |
| GalX-N-Me-DMA | 2,3:4,5-Di-O-isopropylidenschleimsäure-di-(N-methyl-N'-2-O-methacryloyl-ethylamid) | |
| GalX-Amidol | 2,3:4,5-Di-O-isopropyliden-schleimsäure-di-(N-2-hydroxyethylamid) | |
| GalX-Amidol-DMA | 2,3:4,5-Di-O-isopropylidenschleimsäure-di-(N-[2-O-methacryloyl]-ethylamid) | |
| GalX-Amidol-UMA | 2,3:4,5-Di-O-isopropyliden-schleimsäuredi-(N-[2-O-carbamatoethylmethacrylat]-ethylamid) | |
| MMA | Methylacrylsäuremethylester | |
| TEMPOL | 4-Hydroxyl-2,2,6,6-Tetramethylpiperidinyloxyl | |
| Phenothiazin | | |
| HQME | Hydrochinonmonomethylether | |
| EtAc | Ethylacetat | |
| NCO-EtMA | 2-Isocyanatoethylmethacrylat | |
| Harz 1 | Methacrylat aus Beispiel 1.5 | |
| Harz 2 | Methacrylat aus Beispiel 1.6 | |
| UMA | Urethanmethacrylat gemäß Beispiel 1 aus DE 102011017626 B4 | |
| HPMA | 2-Hydroxypropylmethacrylat; Bisomer^{®} HPMA | Geo Specialty Chemicals |
| BDDMA | 1,4-Butandioldimethacrylat; Visiomer^{®} BDDMA | Evonik Industries AG |
| DIPPT | Diisopropanol-p-toluidin | BASF |
| TBC | 4-tert-Butylbrenzcatechin | Merck Chemicals GmbH |
| Catechol | Brenzcatechin | Sigma-Aldrich |
| Secar^{®} 80 | Calciumaluminatzement | Kerneos / Imerys S.A. |
| F32 | Quarzsand | Quarzwerke Frechen |
| Cab-O-Sil^{®} TS-720 | Kieselsäure | Cabot Corporation |

### 1. Herstellung der Methacrylate der biogenen Zucker-Derivate

Die Umesterungsreaktionen von Methacrylsäuremethylester (MMA) mit den Zuckerderivaten lässt sich generell mit Dünnschichtchromatografie (TLC) verfolgen (Probenahme, Abziehen des Überschusses an MMA). Ethylacetat/Heptan ist ein geeignetes Lösemittelpaar (3:7 vol/vol). Entwickelt wurden die Platten mittels alkalischer Permanganatlösung. Ausgewählte Rohprodukte wurden nach Entfernung des Rest-MMA mittels Flash-Chromatografie aufgetrennt, und die Strukturen in den einzelnen Fraktionen wurden mittels NMR-Spektroskopie charakterisiert. Weiterhin wurden die Anteile der Fraktionen gravimetrisch bestimmt.

### 1.1 Beispiel 1 - Umesterung von MMA mit 1,2-O-Isopropyliden-α-D-glucofuranose

13 g 1,2-O-Isopropyliden-α-D-glucofuranose (1,2-IPGF, 97 % -ig, 57,3 mmol), total 300 g MMA (99 %-ig, 2,97 mol, stabilisiert mit 150 ppm Hydrochinonmonomethylether [HQME]), 7,4 mg TEMPOL (0,043 mmol) sowie 6,9 mg Phenothiazin (0,035 mmol), 1,375 g K₃PO₄ (98 %-ig, 6,35 mmol) wurden in einem 500ml-3-Halskolben mit Destillationsaufsatz, Innenthermometer und einer Schliffolive mit Hahn vorgelegt Die Mischung wurde mit einem Magnetrührer gerührt (ca. 700 rpm) und so schnell wie möglich in 2 Schritten auf anfangs 70 später 90 °C (Öltemperatur) aufgeheizt. Dabei wurde ein Vakuum von ca. 440 mbar angelegt. Als Vorlage diente ein 250-ml Rundkolben mit Schliffhahn. Zwischen Destillationsbrücke und Membranpumpe wurde eine Kühlfalle gesetzt, gekühlt mit einem Trockeneis/Aceton-Gemisch (T » -76 °C). Mit Beginn des Siedens im Kolben wurde der Start der Reaktion definiert. Es wurde ein Rücklaufverhältnis von etwa 10:1 eingestellt. Das während der Reaktion entstehende MeOH bildet mit MMA ein Azeotrop. Unter den gewählten Bedingungen kondensiert dies in der Kühlfalle.

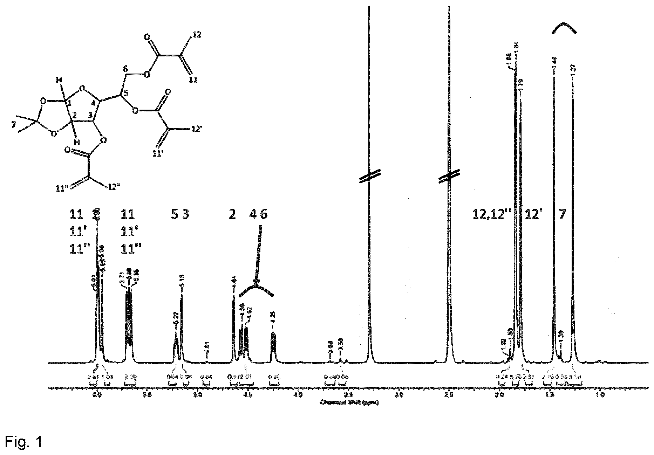

Nach dem Ende der Reaktion wurde die Mischung über Nacht stehen gelassen, der Katalysator abfiltriert, der Niederschlag mit 30 g MMA gespült, der Lösung 50 ppm HQME zugesetzt und anschließend das MMA am Rotationsverdampfer abgezogen. Die Reste an MMA wurden anschließend im Ölpumpenvakuum über 4 Tage bei 25 °C und < 1 mbar abgezogen. Es wurden insgesamt 23,7 g Produkt (ca. 90 mol % Trimethacrylat) in Form eines farblosen, zähen Honigs erhalten. Die chromatografische Trennung des Rohproduktes mittels Flash-Chromatographie erlaubte die Charakterisierung des Trimethacrylats mittels ¹H- **(****Fig. 1****)** und ¹³C-NMR-Spektroskopie. In einer weiteren Fraktion (ca. 50/50 mol %) gelang die Identifizierung eines als Nebenprodukt entstandenen 3-Ringsystems, eines Methacrylats von 3,6-Anhydrido-1,2-O-isopropyliden-α-D-glucofuranose (1,2-IP-3,6-Anhydrido-GF-5-MA).

Im finalen Produktgemisch sind neben dem Trimethacrylat (ca. 90 mol %) max. 6 mol % 1,2-IP-3,6-Anhydrido-GF-5-MA (¹H-NMR-Signale u.a. bei 5,10; 4,91; 3,97; 3,68 und 1,97 ppm), sowie geringe Anteile eines Michael- Addukts (Addition der OH-Gruppe an die Doppelbindung einer Methacrylatgruppe, Signal -O-CH₃ bei 3,58 ppm) und Spuren an Rest-MMA (Signal -O-CH₃ bei 3,68 ppm) enthalten.

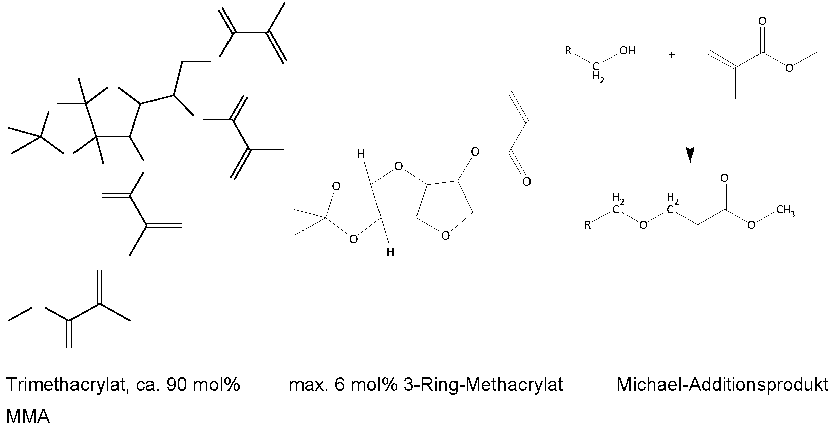

### 1.2 Beispiel 2 - Umesterung von MMA mit 1,2-O-Isopropyliden-α-D-xylofuranose

Die Synthese des Dimethacrylats aus 1,2-O-Isopropyliden-α-D-xylofuranose (1,2-IPXF) erfolgte entsprechend der im Beispiel 1 genannten Vorschrift. 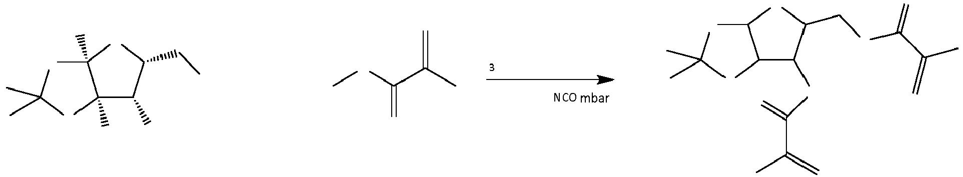 25,03 g 1,2-IPXF (95% = 125,02 mmol), 10,9 mg TEMPOL (0,0633 mmol), 6.8 mg Phenothiazin (0,0342 mmol) wurden bei RT vorgelegt und mit 1,998 g (9,413 mmol) K₃(PO₄)₃ und 275,5 g MMA (2,75 mol) gemischt und auf Reaktionstemperatur unter Rühren und einem Vakuum von ca. 442 mbar erhitzt. Im Vergleich zum Beispiel 1 verläuft die Umesterung etwas schneller, bereits nach 6 h liegt ein Produkt mit ca. 89 mol% 1,2-IPXF-3-5-DMA vor, nach 8 h wurde abgebrochen.

Der Niederschlag wurde mit 54 g MMA gespült, der Lösung 50 ppm HQME zugesetzt und nicht reagiertes MMA entfernt (Ölpumpenvakuum über 2 Tage bei 25 °C und < 1 mbar). Es wurden insgesamt 42,6 g Produkt (ca. 92 mol % Dimethacrylat ≈ 96 % Ausbeute) in Form einer farblosen Flüssigkeit erhalten.

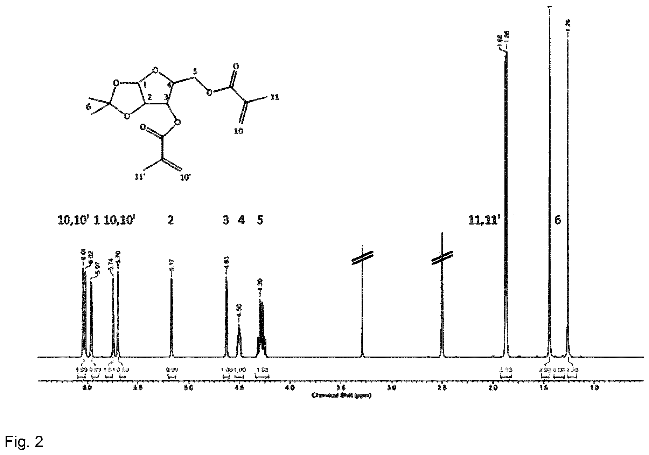

Bei der chromatografischen Trennung des Rohproduktes mittels Flash-Chromatographie wurde eine Fraktion mit reinem 1,2-O-isopropyliden-α-D-xylofuranose-3,5-dimethacrylat (1,2-IPXF-3,5-DMA) isoliert **(****Fig. 2****).** Weitere Fraktionen wurden nicht charakterisiert.

Im finalen Produktgemisch sind neben dem Dimethacrylat (ca. 92 mol %), Monomethacrylate, geringe Anteile von Michael- Addukten (Addition der OH-Gruppe an die Doppelbindung einer Methacrylatgruppe, Signal -O-CH₃ bei 3,58 ppm) und Spuren an Rest- MMA (Signal -O-CH₃ bei 3,68 ppm) enthalten:

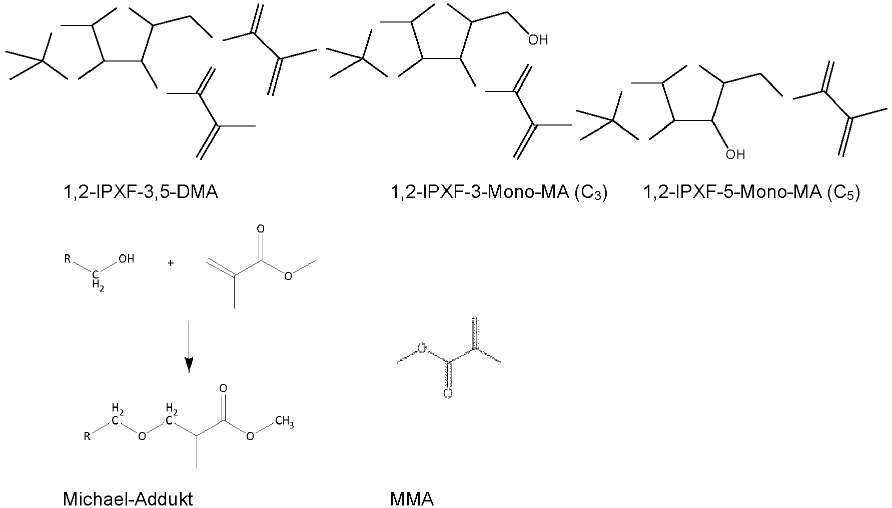

### 1.3 Beispiel 3 - Umesterung von MMA mit 1,2:5,6-Di-O-isopropyliden-D-mannitoi

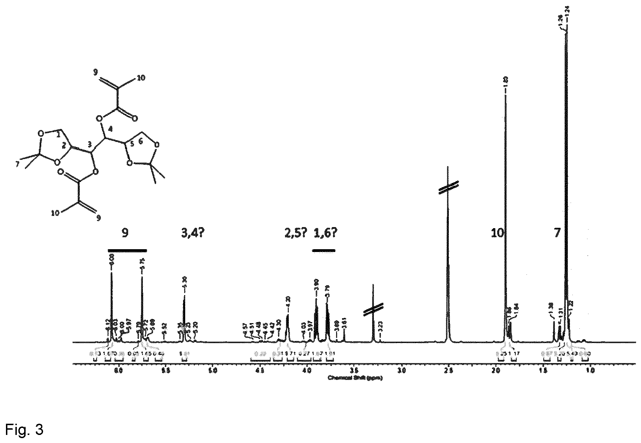

Die Synthese des Dimethacrylats aus 1,2:5,6-Di-O-isopropyliden-D-mannitol (1,2:5,6-DIPM-3,4-DMA, ¹H-NMR-Spektrum s. **Fig. 3**) erfolgte entsprechend der im Beispiel 1 genannten Vorschrift: 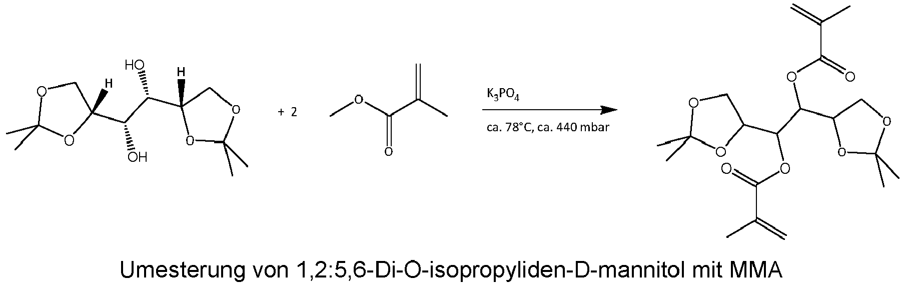 28,51 g 1,2:5,6-DIPM (95% = 103,26 mmol), 9,3 mg TEMPOL (0,054 mmol), 8,3 mg Phenothiazin (0,04 mmol) wurden bei RT vorgelegt und mit 1,733 g (8,16 mmol) K₃(PO₄)₃ und 275,5 g MMA (2,75 mol) gemischt und auf Reaktionstemperatur unter Rühren und einem Vakuum von ca. 523 mbar erhitzt. Im Vergleich zum Beispiel 1 verläuft die Umesterung langsam, nach total 18 h wurde abgebrochen.

Der Niederschlag wurde mit 50 g MMA gespült, der Lösung 50 ppm HQME zugesetzt und nicht reagiertes MMA entfernt (Ölpumpenvakuum über 2,5 Tage bei 25 °C und < 1 mbar). Es wurden 42,65 g einer farblosen, honigartigen Substanz erhalten. Im Finalprodukt sind neben dem gewünschten 1,2:5,6-DIPM-3,4-DMA (ca. 82 mol%) eine Reihe von Nebenprodukten sowie geringe Spuren Rest-MMA enthalten **(****Fig. 3****).** Die Vielzahl der kleinen Signale deutet auf eine partielle Zersetzung des 1,2:5,6-DIPM durch Abspaltung der Schutzgruppe unter den gewählten Reaktionsbedingungen. Die Spaltprodukte tragen sind ebenfalls mit Methacrylatgruppen modifiziert. Darauf weisen die vielen Signale geringer Intensitäten um 6 und 5,75 ppm. Die Signale zwischen 4,3 und 4,6 ppm weisen auf Spezies mit freien OH- Gruppen.

### 1.4 Beispiel 4 - Umesterung von MMA mit einem tetrafunktionellen GalX-Derivat

### a) Synthese des tetrafunktionellen Alkohols

2,3:4,5-Di-O-isopropyliden-schleimsäurediethylester (GalX; von Royal Cosun U.A., NL, zur Verfügung gestellt) war der Ausgangsstoff zur Herstellung mehrfunktioneller Alkoholkomponenten auf Basis von GalX 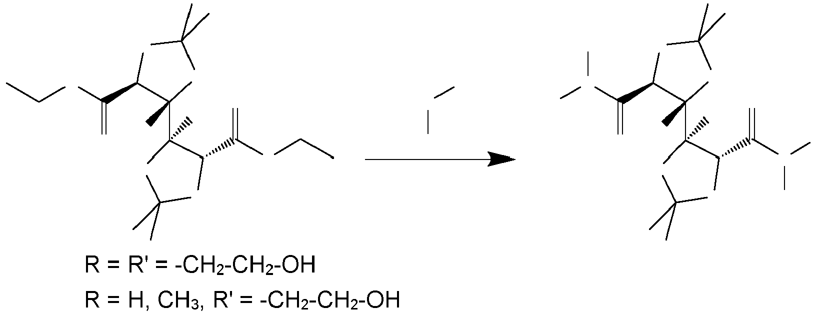 200 g GalX (577 mmol) wurden in einem 2-I-Dreihalskolben mit Einbuchtungen zur besseren Durchmischung, Innenthermometer und Rückflusskühler mit Gaseinleitung (N₂) und Tropfenzähler mit 125,55 g Diethanolamin (1,18 mol) und 751 g Ethanol versetzt und unter Rühren zum leichten Sieden (Tᵢₙₙₑₙ = 76 °C) erhitzt. Nach 24 h Reaktionszeit lag der Umsatz an Ethylestergruppen bei ca. 72 %. Es wurden noch einmal 20 g Diethanolamin (188 mmol) zugesetzt und weitere 3,5 h unter Rückfluss erhitzt. Bei Abbruch der Reaktion wurde der Umsatz der Estergruppen zu 80 % bestimmt. Überschüssiges Ethanol wurde im Vakuum abgezogen und das Produkt im Vakuumtrockenschrank getrocknet. Anschließend wurde das Produkt durch Umkristallisation aus heißem EtAc gereinigt. 35 g Tetraol wurden in 224 ml EtAc gelöst, beim Abkühlen fielen sofort Kristalle aus, die an den Kolbenwänden hafteten. Die Mutterlauge wurde abdekantiert, die Kristalle mehrfach mit kaltem EtAc gewaschen und getrocknet. Das ¹H- NMR-Spektrum der Kristalle bestätigte die Struktur des Tetraols auf Basis GalX. Weiteres Einengen der Mutterlauge und auskristallisieren im Kühlschrank erhöhte die Ausbeute an Tetraol.

### b) Umesterung von MMA mit GalX-Tetraol

Die Synthese des Tetramethacrylats aus GalX-Tetraol (R = R' = CH₂-CH₂-OH) aus 1.4. a), erfolgte entsprechend der im Beispiel 1 genannten Vorschrift.

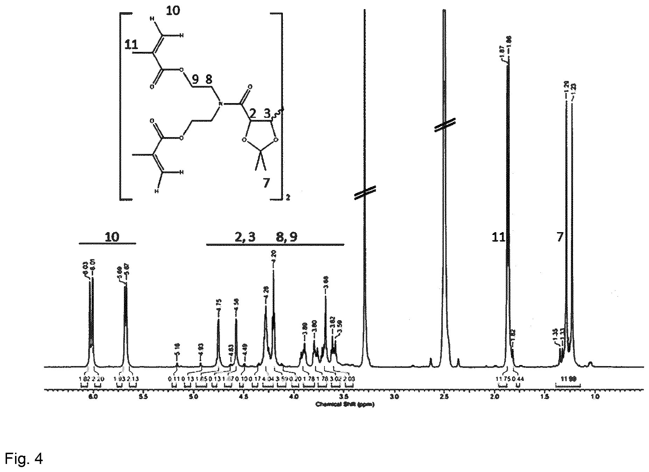

20 g GalX-Tetraol (43 mmol), 8,5 mg TEMPOL (0,05 mmol), 7,2 mg Phenothiazin (0,036 mmol) wurden bei RT vorgelegt und mit 1,375 g (6,48 mmol) K₃(PO₄)₃ und 250,275 g MMA (2,5 mol) gemischt und auf Reaktionstemperatur unter Rühren und einem Vakuum von ca. 442 mbar erhitzt. Die Umesterung verläuft schnell. Bereits nach 2 h waren nur noch Spuren nicht umgesetztes Tetraol im NMR- Spektrum nachweisbar **(****Fig. 4****).** Nach 8 h wurde abgebrochen. Es wurde ein Produktgemisch erhalten, welches ca. 85 mol% Tetra-MA enthält. Der Rest sind weniger substituierte Methacrylate und unumgesetztes MMA.

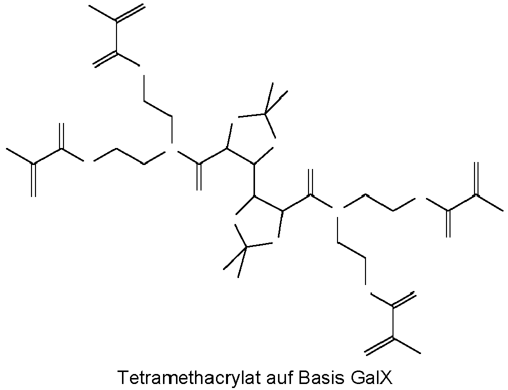

### 1.5 Beispiel 5 - Umesterung von MMA mit dem bifunktionellen GalX-N-Methyl-Derivat

### a) Synthese des bifunktionellen Alkohols GalX-(N-Me-CH₂-CH₂-OH)₂ [GalX-N-Me-Diol]

GalX wurde analog der in Beispiel 4 genannten Vorschrift mit N-Methylaminoethanol umgesetzt (R = CH₂CH₂-OH, R' = CH₃). 185 g GalX (534 mmol) wurden mit 735 g Ethanol versetzt und 82,25 g Amin (99 %-ig, 1,084 mol) zugegeben. Die Lösung wurde für24 h am leichten Sieden gehalten. Eine Analyse mittels ¹H-NMR-Spektroskopie ergab einen Umsatz der Ethylestergruppen von ca. 80 %. Daraufhin wurden weitere 5,5 g (72,5 mmol) Amin zugegeben und die Reaktion für weitere 8,5 h fortgeführt. Der Umsatz an Estergruppen wurde zu 84 % bestimmt und die Reaktion abgebrochen. Ethanol wurde im Vakuum abgezogen und das Rohprodukt im Vakuum getrocknet.

35 g Produkt wurden mit 300 ml EtAc gerührt und die trübe Lösung filtriert. Anschließend wurden ca. 250 ml EtAc im Vakuum bei 35 °C abgezogen. Nach abkühlen der Lösung wurden 24 g Produkt isoliert. Für weitere Nachfällungen wurde am Rotationsverdampfer bis zur leichten Trübung eingeengt, die Lösung abgenommen erhitzt und nach dem Abkühlen der Niederschlag abgesaugt. Durch mehrfache Wiederholung des Vorgangs wurden total 35 g Feststoff isoliert, der im Vakuumtrockenschrank getrocknet wurde. Es wurden 24 g getrocknetes Produkt erhalten, welches noch ca. 12 mol% EtAc enthielt. Das finale Produkt ist frei von unumgesetztem Amin und kann für die weitere Umsetzung verwendet werden. Bei einer Probe, die 6 Tage im Vakuumtrockenschrank getrocknet wurde, betrug der Restgehalt an EtAc noch ca. 3 mol%.

Die Protonen der CH₃- Gruppe am Aminstickstoff zeigen zwei Signale: bei 3,10 und bei 2,87 ppm, da die CH₂-Gruppe (12,15) in cis oder trans-Stellung zur Carboxylgruppe (1, 6) stehen kann.

### b) Umesterung von MMA mit GalX-N-Me-Diol

Die Synthese des Dimethacrylats aus GalX-N-Me-Diol mit R = CH₃, R' = -CH₂-CH₂-OH aus 1.5. a) erfolgte entsprechend der im Beispiel 1 genannten Vorschrift.

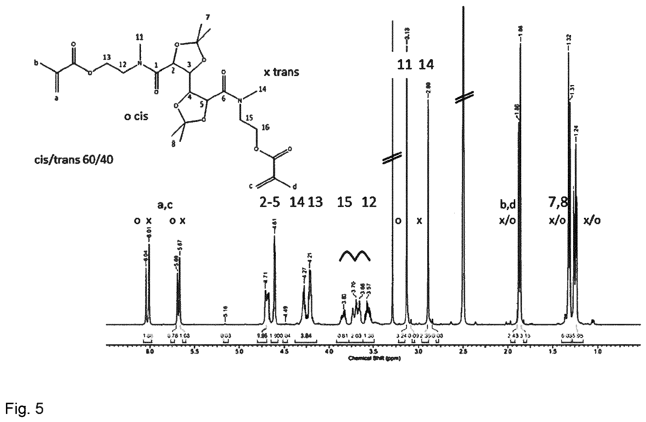

180 g GalX-N-Me-Diol (97 %-ig, 432 mmol), 37,9 mg TEMPOL (0,22 mmol), 35,5 mg Phenothiazin (0,178 mmol) wurden bei RT in einem 2-l-3-Halskolben vorgelegt und mit 1014,5 g MMA (10,1 mol), 7,079 g (33,35 mmol, mit 100 ml MMA hereingespült in Kolben) K₃(PO₄)₃ und gemischt und auf Reaktionstemperatur unter Rühren und einem Vakuum von ca. 425 mbar erhitzt. Die Umesterung verlief schnell. Bereits nach 2 h waren nur noch ca. ¼ unumgesetzter OH-Gruppen im NMR-Spektrum nachweisbar (Fig. 5). Nach 6 h wurde abgebrochen und aufgearbeitet. Das Rest-MMA wurde über total 4 Tage im Ölpumpenvakuum (bis > 1 mbar) abgezogen. Es wurde ein weißer Feststoff erhalten, welcher ca. 92 mol% GalX-N-Me-DMA enthält. Der Rest sind weniger substituierte Methacrylate, Michael-Produkte und Spuren Rest- MMA.

### 1.6 Beispiel 6 - Umesterung von MMA mit dem bifunktionellen GalX-Amidol

GalX-Amidol wurde von Royal Cosun, NL, zur Verfügung gestellt mit R = H, R' = -CH₂-CH₂-OH. Es wurde analog der in Beispiel 1 genannten Vorschrift zur Umesterung von MMA verwendet.

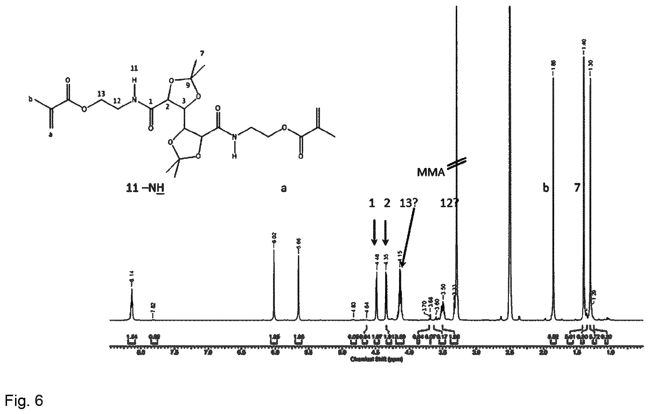

35 g GalX-Amidol (93 mmol), 37,9 mg TEMPOL (0,22 mmol), 35,5 mg Phenothiazin (0,178 mmol) wurden bei RT in einem 250-ml-3-Halskolben vorgelegt und mit 300 g MMA (3 mol), 1,482 g (6,98 mmol, mit 30 ml MMA hereingespült in Kolben) K₃(PO₄)₃ gemischt und auf Reaktionstemperatur unter Rühren und einem Vakuum von ca. 450 mbar erhitzt. Die Umesterung verlief glatt. Bereits nach 2 h waren nur noch Spuren des unumgesetzten Amidols im ¹H-NMR-Spektrum **(****Fig. 6****)** nachweisbar. Nach 8 h wurde abgebrochen und aufgearbeitet. Das Rest-MMA wurde über total 2,5 Tagen im Ölpumpenvakuum (bis > 1 mbar) abgezogen. Es wurde ein weißer Feststoff erhalten, welcher ca. 92 mol% GalX-Amidol-DMA enthält. Der Rest sind weniger substituierte Methacrylate, Michael-Produkte und ca. 2 mol% Rest- MMA.

### 1.7 Beispiel 7 - Synthese des Urethanmethacrylats aus dem bifunktionellen GalX-Amidol

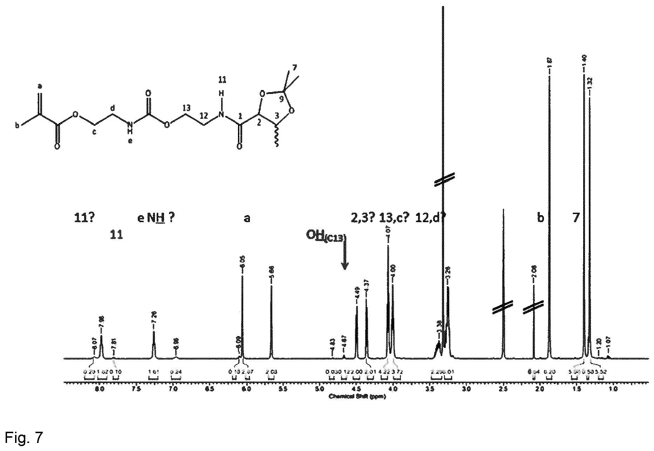

In einem 250-ml-3-Halskolben mit Magnetrührer, Innenthermometer, Rückflusskühler mit Gaseinleitung/-ableitung zu einem Blasenzähler wurden 30 g GalX-Amidol (79,9 mmol), 6,8 mg (0,04 mmol) TEMPOL und 6,04 mg (0,032 mmol) vorgelegt, total 100 g Aceton zugegeben und unter Rühren bei RT das Amidol gelöst. Die erste Hälfte des Isocyanats wurde in 2 Portionen bei RT zugespritzt. Nach 15 min wurde innerhalb einer Stunde zum Sieden (Tinnen 55 - 56 °C) aufgeheizt. Bei Erreichen von Tinnen = 45 °C entstand eine homogene Lösung. Die Mischung wurde für eine Stunde am Sieden gerührt und danach abgekühlt. Ca. 47 % der OH- Gruppen hatten nach 1h zum UMA reagiert **(****Fig. 7****).**

Vor der Fortführung der Reaktion wurde 1 g Amidol (1,67 mmol) zugegeben und anschließend die zweite Hälfte des Isocyanats bei RT unter Rühren zugespritzt. Es wurden insgesamt 26,21 g (168,9 mmol) Isocyanat verwendet. Nach der Isocyanatzugabe wurde über 25 min auf 55 °C aufgeheizt und die Reaktion fortgeführt. Mittels FTIR-Spektroskopie wurde der Verbrauch an NCO- Gruppen verfolgt. Nach total 6 h wurden den Reaktionsgemisch weiter 9 mg DOTL in 0,25 ml Aceton zugespritzt. Nach 10 h Reaktionszeit waren noch geringe Spuren an NCO detektierbar. Es wurden 0,5 g (3,5 mmol) Hydroxypropylmethacrylat (HPMA) zur Abreaktion der restlichen Isocyanatgruppen zugesetzt. Nach total 12 h Rühren bei 55-56 °C wurden keine NCO-Gruppen im FTIR-Spektrum mehr detektiert, die Reaktion abgebrochen. Der Lösung wurden 50 ppm HQME zugegeben und anschließend das Aceton im Rotationsverdampfer abgezogen. Anschließend wurde das Reaktionsprodukt zur Entfernung von Acetonresten für 6 Tage im Ölpumpenvakuum > 1 mbar behandelt. Das finale Produkt ist eine sehr klebrige farblose glasige Masse, das noch ca. 10 mol% Aceton (@ 2 wt%) enthält. Es enthält ca. 78 mol % des gewünschten GalX-Amidol-UMA und ca. 8 mol % nicht vollständig umgesetztes Amidol mit einer UMA-Gruppe, sowie max. 3,5 mol % HPMA-UMA.

### 2. Ergebnisse der Härtungsversuche

Mit den synthetisierten Methacrylaten aus den Beispielen 1 bis 7 wurden deren Einfluss auf die Harzhärtung und ausgewählte mechanische Eigenschaften der gehärteten Harze bestimmt. Neben Temperatur-Zeit-Kurven, in denen erste Aussagen zum Härtungsverhalten im Vergleich zum Referenzsystem erhalten wurden, erfolgte die Herstellung runder Prüfkörper (Æ 5mm, l = 10 mm) für Drucktests sowie die Herstellung von Prüfstäben (10mm x 60 mm x 1 mm) für die Dynamisch-mechanische Analyse (DMA).

### Probenpräparation und Temperatur-Zeit-Kurven

Neben dem Referenzsystem auf Basis eines Urethanmethacrylats aus MDI (MDI-UMA), wurden auch Proben untersucht, denen gezielt die bei der Synthese der neuen Methacrylate verwendeten Mengen an Substanzen (Stabilisatoren: Phenothiazin und HQME, Inhibitor: TEMPOL)) zugesetzt wurden. Damit konnte der Einfluss dieser Zusatzstoffe auf die Härtungsreaktion und die mechanischen Eigenschaften der gehärteten Harze bestimmt werden. Es wurde der teilweise Ersatz des MDI-UMA durch die reaktiven Zuckerderivate realisiert. Dafür wurde die Menge an MDI-UMA in der Mischung halbiert und ersetzt durch die neuen Methacrylate, wobei deren unterschiedlichen Molmassen berücksichtig wurden. Für das fehlende MDI-UMA wurden äquimolare Mengen an C-C-Doppelbindungen der neuen Methacrylate zugegeben, s. Tabelle 1. Damit war die Gesamtmenge an Doppelbindungen in den Harzmischungen jeweils konstant. Viskositätsunterschiede der einzelnen Mischungen untereinander wurden nicht berücksichtigt.

Die Harzmischungen wurden in einem 100 ml 3-Halsskolben mit Magnetrührer und Hahnolive hergestellt. Die Bestandteile wurden eingewogen, und mittels Magnetrührer für mindestens 30 min bei 45 °C intensiv gerührt zur Erzeugung einer homogenen Mischung. Zu Beginn des Rührens wurde zur Reduzierung des Sauerstoffgehalts der Mischung mindestens 3x mit N₂ sekuriert (p < 20 mbar). Anschließend wurde die Mischung in einem Thermostat auf 25 °C temperiert. Es wurden jeweils ca. 3 g (für Temperatur-Zeitkurven und Herstellung der Prüfkörper für Drucktests) bzw. 6 g Mischung (für Herstellung DMA- Prüfstäbe und für Temperatur- Zeitkurven) in einen verschließbaren Becher (10 bzw. 25 ml) eingewogen und die entsprechenden Mengen Perkadox 20S (BPO phlegmatisiert mit Gips, 20-21 Masse-% aktiver Anteil) zugegeben. Das Verhältnis Harz/Initiator betrug für die Referenz 20 g/6 g, es wurde je nach der Zusammensetzung der Mischung angepasst, so dass das Verhältnis der C-C-Doppelbindungen zu Peroxid in allen Versuchen annähernd konstant war. Der Startpunkt der Härtungsreaktion wurde mit der Zugabe des phlegmatisierten BPOs zur Harzmischung in die Probenbecher vom Speedmixer definiert. Nach der Zugabe des BPO wurde die heterogene Mischung in einem Speedmixer (DAC150SP, Hauschild GmbH & Co. KG, Hamm, D, Mischprogramm:10 s - 900 U*min⁻¹; 40 s - 1400 U*min⁻¹; 10 s - 900 U*min⁻¹ = 1 min total) gemischt. 0,7 ml fertige Mischung wurden in ein kleines Vial (2 ml Volumen) gefüllt und ein Messfühler in die etwa 1 cm hohe Mischung eingetaucht. Damit wurden die Temperatur- Zeit- Kurven aufgenommen. Eine Temperierung dieser Vials erfolgte nicht. Aus diesen Kurven wurde die Maximaltemperatur Tₘₐₓ und eine Zeit t_{Wende} bestimmt. Tₘₐₓ ist ein Maß für die bei der Härtung freiwerdende Reaktionswärme durch die Polymerisation der Methacrylate. t_{Wende} steht für die Zeit mit der maximalen Härtungsgeschwindigkeit, sie wird erhalten über das Maximum der ersten Ableitung der Temperatur-Zeitkurve.

Ca. 0,9 ml Mischung wurden in ein 6 cm langes gerades Stückchen PE-Schlauch (Innendurchmesser 5 mm, einseitig verschlossen mit Silikongummistopfen) gefüllt. Die Schlauchform wurde in eine Aluminiumform gesteckt, die in einem Thermostat bei 25 °C temperiert wurde. Nach der Härtung wurde der Schlauch herausgezogen, der Gummistopfen entfernt, der Prüfkörper unter leichtem Druck herausgedrückt und oberflächlich mit Aceton gewaschen zur Entfernung von an der Oberfläche befindlichen, nicht umgesetzten Mischungsanteilen (BDDMA, HPMA).

Für die Herstellung der DMA-Stäbe wurde eine Gießform aus Teflon verwendet, die die gleichzeitige Herstellung von 2 - 3 Prüfkörpern erlaubte. Die einzelnen Formen wurden jeweils mit ca. 1 ml Harzmischung gefüllt (bis Oberkante Form.) Nach der Härtung wurden die Prüfkörper ebenfalls oberflächlich mit Aceton gereinigt und eventuell auftretende Grate mittels Messer oder feinem Schleifpapier entfernt. Vor den Tests wurden alle Prüfkörper für 24 h bei 80 °C nachgehärtet. Die Zeit zwischen Prüfkörperherstellung und der Nachhärtung im Ofen war maximal 3 h. In dieser Zeit wurden die Prüfkörper bei RT gelagert. Im Anschluss an die Nachhärtung wurde aus den Rundstäben Prüfkörper mit planparallelen Enden präpariert (Ø5 mm x 10 mm).

**Tabelle 1: Zusammensetzung der Referenzharzgemische und der erfindungsgemäßen Herzgemische**

| **Probe** | **Referenz 1** | **Referenz 2*** | **Beispiel 1 IPGF-Tri-MA** | **Beispiel 2 IPXF-DMA** | **Beispiel 3 DIPM-DMA** | **Beispiel 4 GalX-Tetra-MA** | **Beispiel 5 GalX-N-Me-DMA** | **Beispiel 6 GalX-Amidol-DMA** | **Beispiel 7 GalX-Amidol-UMA** |
|---|---|---|---|---|---|---|---|---|---|
| Zusatz | Masse-% | Masse-% | Masse-% | Masse-% | Masse-% | Masse-% | Masse-% | Masse-% | Masse-% |
| UMA | 32,60 | 32,57 | 18,09 | 17,87 | 17,56 | 18,470 | 16,97 | 17,15 | 16,4 |
| Zucker-Derivat | - | - | 7,09 | 8,19 | 9,8 | 8,97 | 12,83 | 11,95 | 15,75 |
| BDDMA | 32,60 | 32,61 | 36,19 | 35,78 | 35,13 | 34,82 | 33,95 | 34,3 | 32,81 |
| HPMA** | 32,60 | 32,59 | 36,19 | 35,74 | 35,13 | 35,39 | 33,95 | 34,29 | 32,82 |
| DippT | 1,75 | 1,72 | 1,94 | 1,92 | 1,89 | 1,87 | 1,82 | 1,84 | 1,76 |
| TEMPOL | 0,45 | 0,46 | 0,50 | 0,49 | 0,48 | 0,48 | 0,47 | 0,47 | 0,45 |
| Phenothiazin | - | 0,01 | | | | | | | |
| HQME | - | 0,0027 | | | | | | | |

| | | | | | | | | | |
|---|---|---|---|---|---|---|---|---|---|
| *Referenz 2 enthält zusätzlich 0,012 Masse-% Phenothiazin und 0,002 Masse-% HQME. ** HPMA bezogen auf Gesamtmenge Hydroxypropylmethacrylat (in Batch enthalten zuzüglich frisch hinzugegebenem HPMA | | | | | | | | | |

### Dynamisch-mechanische Analyse (DMA-Messung)

Die Messungen erfolgten mit einem ARES-G2 (Texas Instruments) und der Messsoftware TRIOS mittels einer Einspanneinrichtung, die die DMA-Messung unter Torsion erlaubt. Die Aufheizrate betrug 10 K/min im Temperaturbereich von -20 bis +180 °C. Es wurde der Speichermodul (MPa) bei 20, 50 und 80 °C bestimmt sowie die T_{g} Glasübergangstemperatur (°C) aus dem Maximum der Verlustfaktor Kurve (tanδ=G"/G'). Es wurde mit einer Frequenz von 1 Hz unter einer konstanten Scherung von 100 kPa gemessen. Die Ergebnisse sind in Tabelle 2 dargestellt.

### Druckprüfung

Die Druckprüfung erfolgte in Anlehnung an DIN EN ISO 604 mit einem Kraftaufnehmer von 10kN, einem Wegaufnehmer von Heidenhain. Die Vorkraft betrug 50 N. Der E-Modul (E_{mod} [GPa]) wurde mit einer Geschwindigkeit von 1 mm/min (Beginn/Ende E-Modulermittlung: 250 N/350N) und die Spannung σM (MPa) wurden gemessen. Die Ergebnisse sind in Tabelle 2 dargestellt.

### Ergebnisse DMA und Drucktests

Bei der Interpretation der Werte muss man berücksichtigen, dass 50 mol-% des Performance-Teils im Harz, der Harzgrundköper UMA auf Basis MDI, ersetzt wurden durch die neu synthetisierten Harzgrundkörper auf Basis methacrylierter Zuckerderivate. Bei den Proben der Referenz wurden nach der Synthese zusätzliche Mengen Stabilisatoren (Phenothiazin/HQME) und Inhibitor TEMPOL zugesetzt, vergleichbar den Mengen, die bei der Synthese der neuen Zuckerderivate eingesetzt wurden.

Als gute oder sehr gute Ergebnisse wurden Versuche bewertet, wenn deren Werte denen der Referenz gleichen bzw. diese übertreffen. Für die Referenz bzw. die Referenz mit Zusätzen wurden T_{g tanδ} zwischen 120 und 125 °C bestimmt. Der Speichermodul fiel von 2000 MPa@20 °C über 1600 MPa@50° C auf 1000 MPa@80° C für die Referenzproben. Die Ergebnisse für die Proben mit den neu synthetisierten Zuckermethacrylaten waren vergleichbar der Referenz. Auch die E-Moduli der neuen Harze lagen vergleichbar den Referenzproben, s. Tabelle 2.

Die neu synthetisierten Zuckerderivate können also einen Teil des bisher verwendeten Grundharzes auf Basis MDI ersetzen, ohne dass dies zu einem merklichen Abfall der mechanischen Eigenschaften der gehärteten Harzproben kommt. Das ist überraschend unter Beachtung der Tatsache, dass verschiedene Strukturen unterschiedlicher Größe und Funktionalität als Ersatz für MDI-UMA verwendet wurden.

### Ergebnisse der Temperatur- Zeit- Kurven

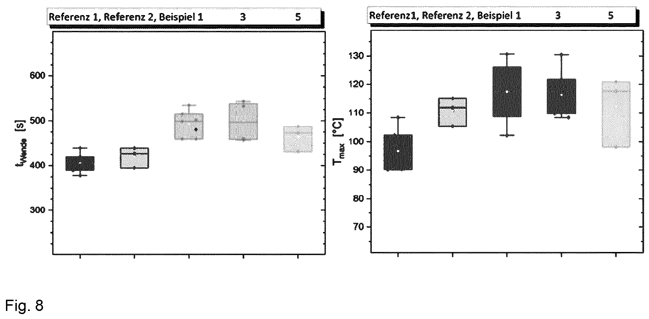

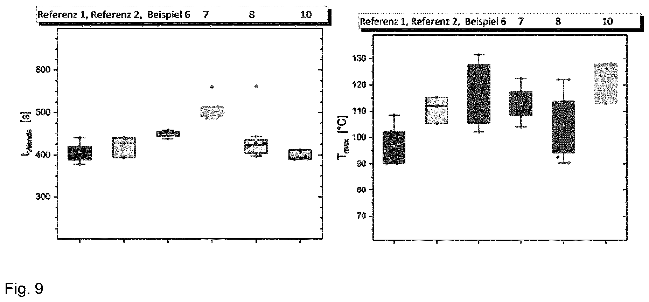

Bei Härtungsversuchen mit den Zuckerderivaten wurden im Vergleich zu den Referenzproben für die IPGF-, IPXF-, DIPM- Derivate sowie für das GalX-NMe-DMA etwas längere t_{Wende} bestimmt (s. **Fig. 8** und **Fig. 9**), wobei die Abweichungen in einem Bereich auftraten, der sich durch die Variation des TEMPOL- Gehalts einstellen lässt. Die beobachtete Wärmefreisetzung Tₘₐₓ lag bei den Proben mit dem neuen Harzzusätzen vergleichbar zu den Referenzproben oder etwas höher, d.h. die neuen Methacrylate werden ähnlich wie das UMA bei der Härtung eingebunden. Damit können Teile des Harzgrundkörpers durch die neuen Derivate ersetzt werden, ohne dass sich die Härtungseigenschaften verschlechtern.

**Tabelle 2: Ergebnisse der Prüfung der mechanischen Eigenschaften gehärteter Harze unter Zusatz von Zuckerderivaten**

| | **Tg [°C]** | **Speichermodul [MPa]** | | | **E_{mod} GPa** | **σM MPa** |
|---|---|---|---|---|---|---|
| | | **@20°C** | **@50°C** | **@80°C** | | |
| | | | | | | |
| Referenz 1 | 126 | 1968 | 1624 | 1012 | 3,11 | 148 |
| Referenz 2 | 125 | 1949 | 1611 | 1001 | 3,28 | 159 |
| Beispiel 1 | 123 | 1913 | 1514 | 893 | 3,38 | 151 |
| Beispiel 2 | 125 | 1891 | 1533 | 958 | 3,36 | 160 |
| Beispiel 3 | 123 | 1869 | 1512 | 878 | 2,78 | 169 |
| Beispiel 4 | 126 | 2041 | 1628 | 984 | 3,55 | 150 |
| Beispiel 5 | 122 | 2015 | 1599 | 925 | 3,34 | 167 |
| Beispiel 6 | 125 | 2099 | 1695 | 1004 | 3,65 | 163 |
| Beispiel 7 | 119 | 2056 | 1656 | 920 | 2,48 | 179 |

### Verwendung der aus Beispiel 5 und 6 erhaltenen Methacrylatharze als Basisharz in einer Reaktivharzmischung für die chemische Befestigung.

### 2. Herstellung der erfindungsgemäßen Reaktivharzmischungen R1 und R2

Zunächst wurden die aus den Beispielen 5 (Harz 1) und 6 (Harz 2) erhaltenen Harze jeweils mit einem Urethanmethacrylat, HPMA und BDDMA gemischt und anschließend die restlichen Bestandteile, wie aus Tabelle 3 ersichtlich, zugegeben und durch Rühren gelöst.

**Tabelle 3: Zusammensetzung der erfindungsgemäßen Reaktivharzmischungen R1 und R2**

| | **R1** [Gew.-%] | **R2** [Gew.-%] |
|---|---|---|
| Harz 1 | 20,0 | - |
| Harz 2 | - | 20,0 |
| UMA | 45,3 | 34,9 |
| HPMA | - | 6,0 |
| BDDMA | 32,0 | 36,4 |
| DIPPT | 2,3 | 2,3 |
| Catechol | 0,3 | 0,3 |
| TBC | 0,1 | 0,1 |

### 3. Herstellung der erfindungsgemäßen Mörtelmassen M1 und M2

Zur Herstellung der erfindungsgemäßen Mörtelmassen wurden die Reaktivharzkomponenten R1 und R2 mit den Füllstoffen und Kieselsäuren, wie in Tabelle 3 gezeigt, gemischt und in einem Dissolver (Fa. PC Laborsystem GmbH, 8 min; 3500U/min) unter Vakuum (80mbar) zu einer luftblasenfreien pastösen Masse homogenisiert.

**Tabelle 4: Zusammensetzung der erfindungsgemäßen Mörtelmassen M1 und M2**

| | **M1** [Gew.-%] | **M2** [Gew.-%] |
|---|---|---|
| R1 | 34,5 | - |
| R2 | - | 34,5 |
| Calciumaluminatzement | 18,5 | 18,5 |
| Quarzsand | 44,2 | 44,2 |
| Kieselsäure | 2,8 | 2,8 |

### Bestimmung der Referenzverbundspannungen der Zweikomponentenmörtel Z1 und Z2

Zur Applikation wurden die Mörtelmassen M1 und M2 als A-Komponenten in ein 5:1 Laborkartuschensystem gefüllt. Als B-Komponente wurde die Härterkomponente von Hilti HIT-HY 200-A verwendet.

Zur Bestimmung der mit den Zweikomponentenmörtel Z1 und Z2 erzielten Verbundspannungen wurde eine hochfeste Ankergewindestange M12 verwendet, die in ein hammergebohrtes Bohrloch mit einem Durchmesser von 14mm und einer Bohrlochtiefe von 60 mm mit der erfindungsgemäßen Zweikomponenten-Mörtelmasse in C20/25 Betonplatten eingedübelt wurde. Zur Bestimmung der Verbundspannung wurde nach einer Aushärtezeit von 24 Stunden bei Raumtemperatur die Versagenslast durch zentrisches Ausziehen der Ankergewindestange mit enger Abstützung ermittelt. Die mittlere Versagenslast wurde anhand der Ergebnisse von fünf Ankern bestimmt.
Referenzbeispiel V1: Hilti HIT-CT 1
Referenzbeispiel V2: Hilti HIT-HY 200-A

| | **V1** | **V2** | **Z1** | **Z2** |
|---|---|---|---|---|
| Referenzverbundspannung in N/mm² | 15,8 | 31,3 | 29,8 | 24,9 |

### KURZE BESCHREIBUNG DER FIGUREN

- Figur 1: zeigt das ¹H-NMR-Spektrum des 1,2-O-Isopropyliden-α-D-glucofuranose-3,5,6-trimethacrylats (1,2-IPGF-3-MA; Beispiel 1; in DMSO-d₆,)
- Figur 2: zeigt das ¹H- NMR-Spektrum des 1,2-O-isopropyliden-α-D-xylofuranose-3,5-dimethacrylat (1,2-IPXF-3,5-DMA; Beispiel 2; in DMSO-d₆)
- Figur 3: zeigt das ¹H- NMR-Spektrum des 1,2:5,6-Bis-O-(isopropyliden)-D-mannitol-3,4-dimethacrylats (1,2:5,6-DIPM-3,4-DMA; Beispiel 3; in DMSO-d₆); Signal bei 3,68 ppm zeigt geringe Spuren Rest- MMA
- Figur 4: zeigt das ¹H-NMR-Spektrum des 2,3:4,5-Di-O-isopropyliden-schleimsäure-di-(N,N'-di-2-O-methacryloyl-ethylamid) (GalX-Tetra-MA; Beispiel 4; Reaktionszeit 2 h; in DMSO-d₆)
- Figur 5: zeigt das ¹H-NMR-Spektrum des 2,3:4,5-Di-O-isopropyliden-schleimsäure-di-(N-methyl-N'-2-O-methacryloyl-ethylamid) (GalX-N-Me-DMA; Beispiel 5; Reaktionszeit 2 h; in DMSO-d₆)
- Figur 6: zeigt das ¹H-NMR- Spektrum des 2,3:4,5-Di-O-isopropylidenschleimsäure-di-(N-[2-O-methacryloyl]-ethylamid) (GalX-Amidol-DMA; Beispiel 6; 2 h Reaktionszeit, in DMSO-d₆); die Signale bei 7,81 und 4,66 ppm sind vom unumgesetzten GalX-Amidol
- Figur 7: zeigt das ¹H-NMR-Spektrum des 2,3:4,5-Di-O-isopropylidenschleimsäuredi-(N-[2-O-carbamatoethylmethacrylat]-ethylamid) (GalX-Amidol-UMA; Beispiel 7; 2 h Reaktionszeit; in DMSO-d₆); die Signale bei 7,81; 4,67 und 3,18 ppm sind von teil- oder unumgesetztem GalX-Amidol
- Figur 8: T_{Wende} und Tₘₐₓ der Mischungen mit den Methacrylaten der Beispiele 1,3 und 5, zum Vergleich Referenz 1 und Referenz 2 (Referenz plus zusätzliche Stabilisatoren, s. Tabelle 1)
- Figur 9: T_{Wende} und Tₘₐₓ der Mischungen mit den Methacrylaten der Beispiele 6-8 und 10, zum Vergleich Referenz 1 und Referenz 2 (Referenz plus zusätzliche Stabilisatoren, s. Tabelle 1)

## Patentansprüche

1. Reaktivharz, umfassend ein Basisharz, welches wenigstens ein Methacrylat eines Zuckerderivats auf Basis einer Furanose, Mannose oder Schleimsäure mit 2 bis 4 primären und/oder sekundären Hydroxylgruppen als reaktiven Bestandteil umfasst.

2. Reaktivharz nach Anspruch 1, wobei die Furanose Glucofuranose oder Xylofuranose ist.

3. Reaktivharz nach Anspruch 1 oder 2, wobei das Methacrylat eine Zuckerderivats erhältlich sind durch
(i) Umesterung von Methylmethacrylat mit dem Zuckerderivat, wodurch ein Zuckerderivatmethacrylat erhalten wird,
oder
(ii) durch Reaktion des Zuckerderivats mit 2-Isocyanatoethylmethacrylat, wodurch ein Urethanmethacrylat erhalten wird.

4. Reaktivharz nach einem der vorhergehenden Ansprüche, wobei das Zuckerderivat aus der Gruppe bestehend aus 1,2-O-isopropylidene-d-glucofuranose, 1,2-O-Isopropylidene-alpha-D-xylofuranose, 1,2:5,6-Di-O-(isopropyliden)-D-mannitol, 2,3:4,5-Di-O-isopropyliden-schleimsäure-di-(N-2-hydroxyethylamid), 2,3:4,5-Di-O-isopropyliden-schleimsäure-di-(N-methyl-N'-2-hydroxyethylamid) und 2,3:4,5-Di-O-isopropyliden-schleimsäure-di-(N,N'-di-2-hydroxyethylamid) ausgewählt ist.

5. Reaktivharz nach einem der vorhergehenden Ansprüche, wobei das Zuckerderivat zumindest teilweise, bevorzugt vollständig biobasiert ist.

6. Reaktivharz nach einem der vorhergehenden Ansprüche, wobei das Basisharz ferner einen weiteren reaktiven Bestandteil enthält, der aus der Gruppe ausgewählt ist, bestehend aus Verbindungen auf Urethan(meth)acrylatbasis, Verbindungen auf Epoxy(meth)acrylatbasis, Methacrylate von alkoxylierten Bisphenolen, Verbindungen auf Basis weiterer ethylenisch ungesättigter Verbindungen und Kombinationen davon.

7. Reaktivharz nach einem der vorhergehenden Ansprüche, wobei das Methacrylat eines Zuckerderivats in einem Anteil von 20 bis 40 Gew.-%, bezogen auf das Gesamtgewicht des Basisharzes, enthalten ist.

8. Reaktivharz nach einem der vorhergehenden Ansprüche, weiterhin umfassend mindestens einen Reaktivverdünner.

9. Reaktivharz nach einem der vorhergehenden Ansprüche, weiterhin umfassend mindestens einen Inhibitor.

10. Reaktivharz nach einem der vorhergehenden Ansprüche, enthaltend
i) 50 bis 95 Gew.-% des Basisharzes,
ii) 5 bis 40 Gew.-% des mindestens eines Reaktivverdünners,
iii) 0,05 bis 5 Gew.-% des mindestens einen Beschleunigers und
iv) bis zu 1,0 Gew.-% des mindestens einen Inhibitors,
jeweils bezogen auf das Gesamtgewicht des Reaktivharzes.

11. Reaktivharzkomponente, umfassend ein Reaktivharz nach einem der Ansprüche 1 bis 10 und mindestens einen anorganischen oder organischen Zuschlagstoff.

12. Reaktivharzkomponente nach Anspruch 11, wobei der mindestens eine anorganische oder organische Zuschlagstoff ausgewählt ist aus der Gruppe bestehend aus Füllstoffen, Verdickungsmitteln, Thixotropiermitteln, nicht reaktiven Lösungsmitteln, Mitteln zur Verbesserung der Fließfähigkeit, Netzmitteln oder Gemischen aus diesen.

13. Mehrkomponenten-System, umfassend
A) die Reaktivharzkomponente nach einem der Ansprüche 10 bis 12, und
B) eine Härterkomponente.

14. Mehrkomponenten-System nach Anspruch 13, wobei die Härterkomponente einen Radikalinitiator als Härtungsmittel und gegebenenfalls anorganische und/oder organische Zuschlagstoffe enthält.

15. Mehrkomponenten-System nach Anspruch 13 oder 14, wobei das Gewichtsverhältnis der Reaktivharzkomponente zur Härterkomponente im Bereich von etwa 3:1 bis etwa 10:1, insbesondere von etwa 3:1 bis etwa 7:1 liegt.

16. Verwendung von mindestens Methacrylat eines Zuckerderivats auf Basis einer Furanose, Mannose oder Schleimsäure mit 2 bis 4 primären und/oder sekundären Hydroxylgruppen, wie in den Ansprüchen 1 bis 5 beschrieben, als reaktiver Bestandteil in einem Reaktivharz zur chemischen Befestigung.

17. Verwendung nach Anspruch 16, wobei die chemische Befestigung die Befestigung eines Verankerungsmittels in einem Bohrloch ist, und das Verankerungsmittel bevorzugt aus Stahl oder Eisen ist.
